# EUROPEAN PATENT APPLICATION

(11) **EP 4 503 700 A1**
(43) Date of publication of application: **05.02.2025**
(21) Application number: 22940785.3
(22) Date of filing: 27.12.2022
(51) Int. Cl.: H04W 24/02

(54) **DATA PACKET TRANSMISSION METHODS, COMMUNICATION DEVICE, STORAGE MEDIUM AND PROGRAM PRODUCT**

(30) Priority: 06.05.2022 CN 202210485758
(71) Applicant: Tencent Technology (Shenzhen) Company Limited, Shenzhen, Guangdong 518057 (CN)
(72) Inventor: ZHANG, Zhuoyun, Shenzhen, Guangdong 518057 (CN)
(74) Representative: Nederlandsch Octrooibureau
(86) International application number: PCT/CN2022/142209
(87) International publication number: WO 2023/213091

(57) **Abstract**

Data packet transmission methods, a communication device, a storage medium, and a program product, belonging to the technical field of communications. One method is executed by a network device. The method comprises: acquiring first service quality configuration file information of a target service flow from a session management function network element (S310),the first service quality configuration file information comprising a first data detection rule and a first processing rule, and the first data detection rule comprising dependency identification information of a data packet in a core network; receiving a data packet to be forwarded (S320); and processing the data packet to be forwarded according to the first data detection rule and the first processing rule in the first service quality configuration file information(S330).In the solution provided by the embodiments of the present disclosure, the network device can process the data packet to be forwarded on the basis of the first data detection rule and the first processing rule in the first service quality configuration file information, so that the transmission process of the data packet can be optimized.

## Description

### RELATED APPLICATION

This disclosure claims priority to Chinese Patent Application No. 202210485758.3, filed on May 06, 2022 and entitled "PACKET TRANSMISSION METHOD AND RELATED DEVICE".

### FIELD OF THE TECHNOLOGY

The present disclosure relates to the field of communications technologies, and ally, to a packet transmission method, a communication device, a storage medium, and a program product.

### BACKGROUND OF THE DISCLOSURE

In a process of transmitting a packet over a network, the packet may need to be processed to adapt to a network transmission status, but an adequate manner of determining how to process the packet to minimize a deterioration of service experience of a service has not been provided in related technologies.

### SUMMARY

Embodiments of the present disclosure provide a packet transmission method, a communication device, a storage medium, and a program product, to optimize a packet transmission process.

An embodiment of the present disclosure provides a packet transmission method, executable by a base station, and the method including: obtaining first quality of service (QoS) profile information of a target service stream from a session management object (SMO), the first QoS profile information including a first data detection rule and a first processing rule, and the first data detection rule including dependency identification information of a packet in a core network; receiving a to-be-forwarded packet; and processing the to-be-forwarded packet according to the first data detection rule and the first processing rule in the first QoS profile information.

An embodiment of the present disclosure provides a packet transmission method, executable by a network device corresponding to a user plane object (UPO), and the method including: obtaining a first data detection rule and a first processing rule of a target service stream from an SMO, the first data detection rule including dependency identification information of a packet in a core network; receiving a to-be-forwarded packet; and processing the to-be-forwarded packet according to the first data detection rule and the first processing rule.

An embodiment of the present disclosure provides a packet transmission method, executable by a base station, and the method including: obtaining second QoS profile information of a target service stream from an SMO, the second QoS profile information including a second data detection rule and a second processing rule, and the second data detection rule including group identification information of a packet in a core network of the target service stream and inter-group dependency identification information in the core network; receiving a to-be-forwarded packet; and processing the to-be-forwarded packet according to the second data detection rule and the second processing rule in the second QoS profile information.

An embodiment of the present disclosure provides a packet transmission method, executable by a network device corresponding to a UPO, and the method including: obtaining a second data detection rule and a second processing rule of a target service stream from an SMO, the second data detection rule including group identification information of a packet in a core network of the target service stream and inter-group dependency identification information in the core network; receiving a to-be-forwarded packet; and processing the to-be-forwarded packet according to the second data detection rule and the second processing rule.

An embodiment of the present disclosure provides a packet transmission method, executable by a network device corresponding to an SMO, and the method including: obtaining a first packet processing policy rule from a policy control object (PCO), the first packet processing policy rule including external dependency identification information of a packet of a target service stream and dependency identification information that is of a packet in a core network and that corresponds to the external dependency identification information; generating first QoS profile information of the target service stream, a third data detection rule, a third processing rule, and a first QoS rule according to the first packet processing policy rule, the first QoS profile information including a first data detection rule and a first processing rule, the first data detection rule including the dependency identification information, the third data detection rule including the external dependency identification information, the third processing rule including the dependency identification information, and the first QoS rule including the external dependency identification information and the dependency identification information corresponding to the external dependency identification information; and sending the first QoS profile information to a network device, sending the third data detection rule and the third processing rule to an anchor UPO, and sending the first QoS rule to a terminal.

An embodiment of the present disclosure provides a packet transmission method, executable by a network device corresponding to an SMO, and the method including: obtaining a second packet processing policy rule from a PCO, the second packet processing policy rule including external group identification information of a packet of a target service stream, group identification information that is of a packet in a core network and that corresponds to the external group identification information, inter-group external dependency identification information of the packet, and inter-group dependency identification information that is of the packet in the core network and that corresponds to the inter-group external dependency identification information; generating second QoS profile information of the target service stream, a fourth data detection rule, a fourth processing rule, and a second QoS rule according to the second packet processing policy rule, the second QoS profile information including a second data detection rule and a second processing rule, the second data detection rule including the group identification information and the inter-group dependency identification information, the fourth data detection rule including the external group identification information and the inter-group external dependency identification information, the fourth processing rule including the group identification information and the inter-group dependency identification information, and the second QoS rule including the external group identification information, the group identification information corresponding to the external group identification information, the inter-group external dependency identification information, and the inter-group dependency identification information corresponding to the inter-group external dependency identification information; and sending the second QoS profile information to a network device, sending the fourth data detection rule and the fourth processing rule to an anchor UPO, and sending the second QoS rule to a terminal.

An embodiment of the present disclosure provides a packet transmission method, executable by a network device corresponding to a PCO, and the method including: obtaining external dependency identification information of a packet of a target service stream; determining dependency identification information that is of a packet in a core network and that corresponds to the external dependency identification information; generating a first packet processing policy rule according to the dependency identification information, the first packet processing policy rule including the external dependency identification information and the dependency identification information corresponding to the external dependency identification information; and sending the first packet processing policy rule to an SMO.

An embodiment of the present disclosure provides a packet transmission method, executable by a network device corresponding to a PCO, and the method including: obtaining external group identification information of a packet of a target service stream and inter-group external dependency identification information of the packet; determining group identification information that is of a packet in a core network and that corresponds to the external group identification information, and inter-group dependency identification information that is of the packet in the core network and that corresponds to the inter-group external dependency identification information; generating a second packet processing policy rule, the second packet processing policy rule including the external group identification information, the group identification information corresponding to the external group identification information, the inter-group external dependency identification information, and the inter-group dependency identification information corresponding to the inter-group external dependency identification information; and sending the second packet processing policy rule to an SMO.

An embodiment of the present disclosure provides a packet transmission method, executable by a network device corresponding to an application object (AO), and the method including: transmitting external dependency identification information of a packet of a target service stream to a PCO through a first request message; and receiving a first response message returned for the first request message, the first request message being configured for instructing the PCO to determine dependency identification information of a packet in a core network corresponding to the external dependency identification information according to the external dependency identification information, and generate a first packet processing policy rule, and the first packet processing policy rule including the external dependency identification information and the dependency identification information.

An embodiment of the present disclosure provides a packet transmission method, executable by a network device corresponding to an AO, and the method including: transmitting external group identification information of a packet of a target service stream and inter-group external dependency identification information of the packet to a PCO through a second request message; and receiving a second response message returned for the second request message, the second request message being configured for instructing the PCO to determine group identification information that is of a packet in a core network and that corresponds to the external group identification information and inter-group dependency identification information that is of the packet in the core network and that corresponds to the inter-group external dependency identification information, and generate a second packet processing policy rule, and the second packet processing policy rule including the external group identification information, the group identification information corresponding to the external group identification information, the inter-group external dependency identification information, and the inter-group dependency identification information corresponding to the inter-group external dependency identification information.

An embodiment of the present disclosure provides a packet transmission method, executable by a terminal, and the method including: obtaining a first QoS rule or a second QoS rule of a target service stream, the first QoS rule including external dependency identification information of a packet of the target service stream and dependency identification information that is of a packet in a core network and that corresponds to the external dependency identification information; and the second QoS rule including external group identification information of the packet of the target service stream, group identification information that is of a packet in a core network and that corresponds to the external group identification information, inter-group external dependency identification information of the packet of the target service stream, and inter-group dependency identification information that is of the packet in the core network and that corresponds to the inter-group external dependency identification information; marking, in response to determining that external dependency identification information of an uplink packet of the target service stream satisfies the first QoS rule, the uplink packet with the dependency identification information; or marking, in response to determining that external group identification information and inter-group external dependency identification information of an uplink packet of the target service stream satisfy the second QoS rule, the uplink packet with the group identification information and the inter-group dependency identification information; and sending the uplink packet to a network device.

An embodiment of the present disclosure provides a packet transmission method, executable by a network device corresponding to an anchor UPO, and the method including: obtaining a third data detection rule and a third processing rule of a target service stream, the third data detection rule including external dependency identification information of a packet of the target service stream, and the third processing rule including dependency identification information that is of a packet in a core network and that corresponds to the external dependency identification information; marking, in response to determining that external dependency identification information of a downlink packet of the target service stream satisfies the third data detection rule, the downlink packet with the dependency identification information in the third processing rule; and sending the downlink packet that is encapsulated and that is marked with the dependency identification information to a network device.

An embodiment of the present disclosure provides a packet transmission method, executable by a network device corresponding to an anchor UPO, and the method including: obtaining a fourth data detection rule and a fourth processing rule of a target service stream, the fourth data detection rule including external group identification information of a packet of the target service stream and inter-group external dependency identification information of the packet of the target service stream, and the fourth processing rule including group identification information that is of a packet in a core network and that corresponds to the external group identification information, and inter-group dependency identification information that is of the packet in the core network and that corresponds to the inter-group external dependency identification information; marking, in response to determining that external group identification information and inter-group external dependency identification information of a downlink packet of the target service stream satisfy the fourth data detection rule, the downlink packet with the corresponding group identification information and the corresponding inter-group dependency identification information corresponding in the fourth processing rule; and sending the downlink packet that is encapsulated and that is marked with the group identification information and the inter-group dependency identification information to a network device.

An embodiment of the present disclosure provides a packet transmission method, executable by a network device corresponding to an AO, and the method including: transmitting an updated frame rate parameter of a target service stream to a PCO, the updated frame rate parameter being configured for instructing the PCO to generate a network configuration policy rule and send the network policy configuration policy rule to an SMO, and the network configuration policy rule including the updated frame rate parameter; the network configuration policy rule being configured for instructing the SMO to send the updated frame rate parameter to a network device; and the updated frame rate parameter being configured for instructing the network device to update network parameter configuration information of the network device and a terminal according to the updated frame rate parameter.

An embodiment of the present disclosure provides a base station, including: a receiving unit, configured to obtain first QoS profile information of a target service stream from an SMO, the first QoS profile information including a first data detection rule and a first processing rule, and the first data detection rule including dependency identification information of a packet in a core network; the receiving unit being further configured to receive a to-be-forwarded packet; and a processing unit, configured to process the to-be-forwarded packet according to the first data detection rule and the first processing rule in the first QoS profile information.

An embodiment of the present disclosure provides a network device corresponding to a UPO, including: a receiving unit, configured to obtain a first data detection rule and a first processing rule of a target service stream from an SMO, the first data detection rule including dependency identification information of a packet in a core network; the receiving unit being further configured to receive a to-be-forwarded packet; and a processing unit, configured to process the to-be-forwarded packet according to the first data detection rule and the first processing rule.

An embodiment of the present disclosure provides a base station, including: a receiving unit, configured to obtain second QoS profile information of a target service stream from an SMO, the second QoS profile information including a second data detection rule and a second processing rule, and the second data detection rule including group identification information of a packet in a core network of the target service stream and inter-group dependency identification information in the core network; the receiving unit being further configured to receive a to-be-forwarded packet; and a processing unit, configured to process the to-be-forwarded packet according to the second data detection rule and the second processing rule in the second QoS profile information.

An embodiment of the present disclosure provides a network device corresponding to a UPO, including: a receiving unit, configured to obtain a second data detection rule and a second processing rule of a target service stream from an SMO, the second data detection rule including group identification information of a packet in a core network of the target service stream and inter-group dependency identification information in the core network; the receiving unit being further configured to receive a to-be-forwarded packet; and a processing unit, configured to process the to-be-forwarded packet according to the second data detection rule and the second processing rule.

An embodiment of the present disclosure provides a network device corresponding to an SMO, including: a receiving unit, configured to obtain a first packet processing policy rule from a PCO, the first packet processing policy rule including external dependency identification information of a packet of a target service stream and dependency identification information that is of a packet in a core network and that corresponds to the external dependency identification information; a processing unit, configured to generate first QoS profile information of the target service stream, a third data detection rule, a third processing rule, and a first QoS rule according to the first packet processing policy rule, the first QoS profile information including a first data detection rule and a first processing rule, the first data detection rule including the dependency identification information, the third data detection rule including the external dependency identification information, the third processing rule including the dependency identification information, and the first QoS rule including the external dependency identification information and the dependency identification information corresponding to the external dependency identification information; and a sending unit, configured to send the first QoS profile information to a network device, send the third data detection rule and the third processing rule to an anchor UPO, and send the first QoS rule to a terminal.

An embodiment of the present disclosure provides a network device corresponding to an SMO, including: a receiving unit, configured to obtain a second packet processing policy rule from a PCO, the second packet processing policy rule including external group identification information of a packet of a target service stream, group identification information that is of a packet in a core network and that corresponds to the external group identification information, inter-group external dependency identification information of the packet, and inter-group dependency identification information that is of the packet in the core network and that corresponds to the inter-group external dependency identification information; a processing unit, configured to generate second QoS profile information of the target service stream, a fourth data detection rule, a fourth processing rule, and a second QoS rule according to the second packet processing policy rule, the second QoS profile information including a second data detection rule and a second processing rule, the second data detection rule including the group identification information and the inter-group dependency identification information, the fourth data detection rule including the external group identification information and the inter-group external dependency identification information, the fourth processing rule including the group identification information and the inter-group dependency identification information, and the second QoS rule including the external group identification information, the group identification information corresponding to the external group identification information, the inter-group external dependency identification information, and the inter-group dependency identification information corresponding to the inter-group external dependency identification information; and a sending unit, configured to send the second QoS profile information to a network device, send the fourth data detection rule and the fourth processing rule to an anchor UPO, and send the second QoS rule to a terminal.

An embodiment of the present disclosure provides a network device corresponding to a PCO, including: a receiving unit, configured to: obtain external dependency identification information of a packet of a target service stream; and determine dependency identification information that is of a packet in a core network and that corresponds to the external dependency identification information; a processing unit, configured to generate a first packet processing policy rule according to the dependency identification information, the first packet processing policy rule including the external dependency identification information and the dependency identification information corresponding to the external dependency identification information; and a sending unit, configured to send the first packet processing policy rule to an SMO.

An embodiment of the present disclosure provides a network device corresponding to a PCO, including: a receiving unit, configured to obtain external group identification information of a packet of a target service stream and inter-group external dependency identification information of the packet; determining group identification information that is of a packet in a core network and that corresponds to the external group identification information, and inter-group dependency identification information that is of the packet in the core network and that corresponds to the inter-group external dependency identification information; a processing unit, configured to generate a second packet processing policy rule, the second packet processing policy rule including the external group identification information, the group identification information corresponding to the external group identification information, the inter-group external dependency identification information, and the inter-group dependency identification information corresponding to the inter-group external dependency identification information; and a sending unit, configured to send the second packet processing policy rule to an SMO.

An embodiment of the present disclosure provides a network device corresponding to an AO, including: a sending unit, configured to transmit external dependency identification information of a packet of a target service stream to a PCO through a first request message; and a receiving unit, configured to receive a first response message returned for the first request message, the first request message being configured for instructing the PCO to determine dependency identification information of a packet in a core network corresponding to the external dependency identification information according to the external dependency identification information, and generate a first packet processing policy rule, the first packet processing policy rule including the external dependency identification information and the dependency identification information corresponding to the external dependency identification information.

An embodiment of the present disclosure provides a network device corresponding to an AO, including: a sending unit, configured to transmit external group identification information of a packet of a target service stream and inter-group external dependency identification information of the packet to a PCO through a second request message; and a receiving unit, configured to receive a second response message returned for the second request message, the second request message being configured for instructing the PCO to determine group identification information that is of a packet in a core network and that corresponds to the external group identification information and inter-group dependency identification information that is of the packet in the core network and that corresponds to the inter-group external dependency identification information, and generate a second packet processing policy rule, and the second packet processing policy rule including the external group identification information, the group identification information corresponding to the external group identification information, the inter-group external dependency identification information, and the inter-group dependency identification information corresponding to the inter-group external dependency identification information.

An embodiment of the present disclosure provides a terminal, including: a receiving unit, configured to obtain a first QoS rule or a second QoS rule of a target service stream, the first QoS rule including external dependency identification information of a packet of the target service stream and dependency identification information that is of a packet in a core network and that corresponds to the external dependency identification information; and the second QoS rule including external group identification information of the packet of the target service stream, group identification information that is of a packet in a core network and that corresponds to the external group identification information, inter-group external dependency identification information of the packet of the target service stream, and inter-group dependency identification information that is of the packet in the core network and that corresponds to the inter-group external dependency identification information; a processing unit, configured to: mark, in response to determining that external dependency identification information of an uplink packet of the target service stream satisfies the first QoS rule, the uplink packet with the dependency identification information; or marking, in response to determining that external group identification information and inter-group external dependency identification information of an uplink packet of the target service stream satisfy the second QoS rule, the uplink packet with the group identification information and the inter-group dependency identification information; and a sending unit, configured to send the uplink packet to a network device.

An embodiment of the present disclosure provides a network device corresponding to an anchor UPO, including: a receiving unit, configured to obtain a third data detection rule and a third processing rule of a target service stream, the third data detection rule including external dependency identification information of a packet of the target service stream, and the third processing rule including dependency identification information that is of a packet in a core network and that corresponds to the external dependency identification information; a processing unit, configured to mark, in response to determining that external dependency identification information of a downlink packet of the target service stream satisfies the third data detection rule, the downlink packet with the dependency identification information in the third processing rule; and a sending unit, configured to send the downlink packet that is encapsulated and that is marked with the dependency identification information to a network device.

An embodiment of the present disclosure provides a network device corresponding to an anchor UPO, including: a receiving unit, configured to obtain a fourth data detection rule and a fourth processing rule of a target service stream, the fourth data detection rule including external group identification information of a packet of the target service stream and inter-group external dependency identification information of the packet of the target service stream, and the fourth processing rule including group identification information that is of a packet in a core network and that corresponds to the external group identification information, and inter-group dependency identification information that is of the packet in the core network and that corresponds to the inter-group external dependency identification information; a processing unit, configured to mark, in response to determining that external group identification information and inter-group external dependency identification information of a downlink packet of the target service stream satisfy the fourth data detection rule, the downlink packet with the corresponding group identification information and the corresponding inter-group dependency identification information corresponding in the fourth processing rule; and a sending unit, configured to send the downlink packet that is encapsulated and that is marked with the group identification information and the inter-group dependency identification information to a network device.

An embodiment of the present disclosure provides a network device corresponding to an AO, including: a sending unit, configured to transmit an updated frame rate parameter of a target service stream to a PCO, the updated frame rate parameter being configured for instructing the PCO to generate a network configuration policy rule and send the network policy configuration policy rule to an SMO, and the network configuration policy rule including the updated frame rate parameter; the network configuration policy rule being configured for instructing the SMO to send the updated frame rate parameter to a network device; and the updated frame rate parameter being configured for instructing the network device to update network parameter configuration information of the network device and a terminal according to the updated frame rate parameter.

An embodiment of the present disclosure provides a communication device, including: one or more processors; and a memory, configured to store one or more programs, the one or more programs, when being executed by the one or more processors, causing the communication device to implement the packet transmission method in some embodiments.

An embodiment of the present disclosure provides a computer-readable storage medium, having a computer program stored therein, the computer program, when being run on a computer, causing the computer to implement the packet transmission method in some embodiments.

An embodiment of the present disclosure provides a computer program product, including a computer program, the computer program, when being executed by a computer, implementing the packet transmission method in some embodiments.

In a method provided in some implementations of the present disclosure, a network device obtains first QoS profile information of a target service stream from an SMO, the first QoS profile information including a first data detection rule and a first processing rule, and the first data detection rule carrying dependency identification information of a packet in a core network, so that in response to receiving a to-be-forwarded packet, the network device can determine, according to the first data detection rule and the first processing rule in the first QoS profile information, how to process the to-be-forwarded packet, to optimize a network transmission process of the to-be-forwarded packet.

### BRIEF DESCRIPTION OF THE DRAWINGS

FIG. 1 is a schematic diagram of a communication system architecture according to some embodiments of the present disclosure.
FIG. 2 is a system architecture diagram of a 5G network according to some embodiments of the present disclosure.
FIG. 3 is a flowchart of a packet transmission method according to some embodiments of the present disclosure.
FIG. 4 is a schematic diagram of interaction of a packet transmission method according to some embodiments of the present disclosure.
FIG. 5 is a schematic diagram of interaction of a packet transmission method according to another embodiment of the present disclosure.
FIG. 6 is a schematic diagram of interaction of a packet transmission method according to still another embodiment of the present disclosure.
FIG. 7 is a schematic diagram of interaction of a packet transmission method according to yet another embodiment of the present disclosure.
FIG. 8 is a flowchart of a packet transmission method according to another embodiment of the present disclosure.
FIG. 9 is a flowchart of a packet transmission method according to still another embodiment of the present disclosure.
FIG. 10 is a flowchart of a packet transmission method according to yet another embodiment of the present disclosure.
FIG. 11 is a flowchart of a packet transmission method according to yet another embodiment of the present disclosure.
FIG. 12 is a schematic diagram of interaction of a packet transmission method according to yet another embodiment of the present disclosure.
FIG. 13 is a schematic diagram of interaction of a packet transmission method according to yet another embodiment of the present disclosure.
FIG. 14 is a schematic diagram of interaction of a packet transmission method according to yet another embodiment of the present disclosure.
FIG. 15 is a schematic diagram of interaction of a packet transmission method according to yet another embodiment of the present disclosure.
FIG. 16 is a flowchart of a packet transmission method according to yet another embodiment of the present disclosure.
FIG. 17 is a flowchart of a packet transmission method according to yet another embodiment of the present disclosure.
FIG. 18 is a flowchart of a packet transmission method according to yet another embodiment of the present disclosure.
FIG. 19 is a flowchart of a packet transmission method according to yet another embodiment of the present disclosure.
FIG. 20 is a schematic diagram of interaction of a packet transmission method according to yet another embodiment of the present disclosure.
FIG. 21 is a schematic structural diagram of a communication device according to some embodiments of the present disclosure.

### DESCRIPTION OF EMBODIMENTS

The technical solutions in some embodiments may be applied to various communication systems, such as a Global System for Mobile Communications (GSM) system, a Code Division Multiple Access (CDMA) system, a Wideband Code Division Multiple Access (WCDMA) system, a general packet radio service (GPRS), a Long Term Evolution (LTE) system, an LTE frequency division duplex (FDD) system, an LTE time division duplex (TDD) system, a Universal Mobile Telecommunications System (UMTS), and a Worldwide Interoperability for Microwave Access (WiMAX) communication system, a 5G system, or a future evolved mobile communication system.

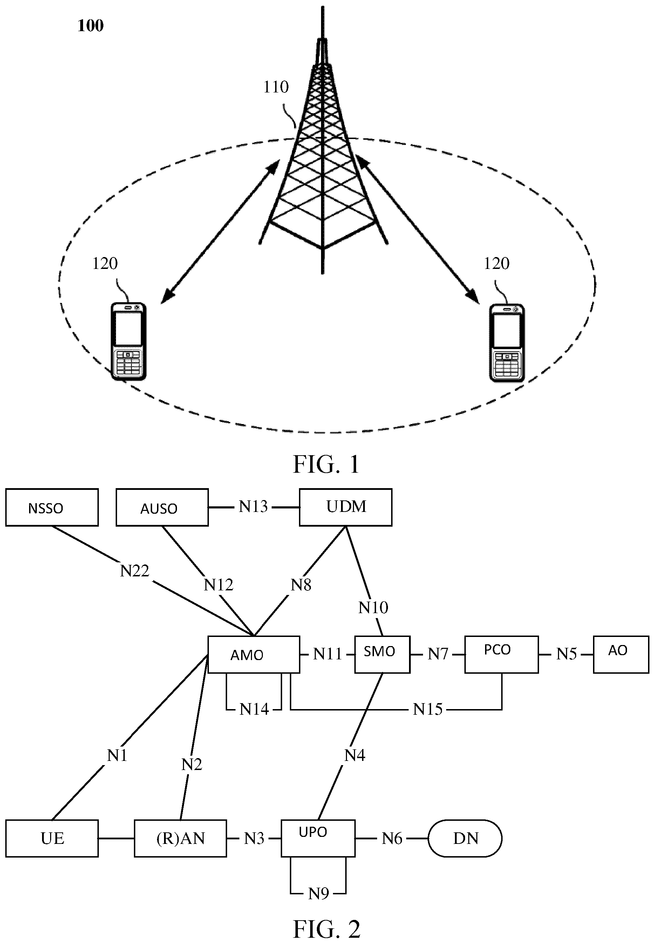

For example, a communication system 100 according to some embodiments is shown in FIG. 1. The communication system 100 may include a network device 110, and the network device 110 may be a device communicating with a terminal 120 (or referred to as a communication terminal or a terminal). The network device 110 may provide communication coverage for a geographic area, and may communicate with a terminal located inside the covered area. In some embodiments, the network device 110 may be a base transceiver station (BTS) in a GSM system or a CDMA system, a NodeB (NB) in a WCDMA system, an evolved NodeB (eNB or eNodeB) in an LTE system, a base station in a 5G communication system, or a wireless controller in a cloud radio access network (CRAN). Alternatively, the network device may be a network side device in a mobile switching center, a relay station, an access point, an in-vehicle device, a wearable device, a hub, a switch, a bridge, a router, or a 5G network, or may be a network device or the like in a future evolved public land mobile network (PLMN).

The communication system 100 further includes at least one terminal device 120 located within the coverage range of the network device 110. The "terminal" used herein includes, but is not limited to: being connected through a wired line, for example, through a public switched telephone network (PSTN), a digital subscriber line (DSL), a digital cable, or a direct cable; and/or another data connection/network; and/or being connected through a wireless interface, for example, through a cellular network, a wireless local area network (WLAN), a digital television network such as a DVB-H network, a satellite network, or an AM-FM broadcast transmitter; and/or an apparatus of another terminal that is configured to receive/send communication signals; and/or an Internet of Things (IoT) device. The terminal that is configured to communicate through the wireless interface may be referred to as a "wireless communication terminal", a "wireless terminal", or a "mobile terminal". An example of the mobile terminal includes, but is not limited to, a satellite or a cellular phone; a personal communications system (PCS) terminal that combines a cellular radio telephone, data processing, fax, and data communication capabilities; and may be a PDA including a radio telephone, a beeper, Internet/Intranet access, a web browser, a memo pad, a calendar, and/or a global positioning system (GPS) receiver; and may be a laptop and/or palmtop receiver or another electronic apparatus including a radio telephone transceiver. The terminal may be an access terminal, user equipment (UE), a subscriber unit, a subscriber station, a mobile station, a mobile console, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a wireless local loop (WLL) station, a personal digital assistant (PDA), a handheld device having a wireless communication function, a computing device, another processing device connected to a wireless modem, an in-vehicle device, a wearable device, a terminal in a 5G network, a terminal in a future evolved PLMN or the like.

In some embodiments, the terminals 120 may perform device to device (D2D) communication with each other.

FIG. 1 shows one network device and two terminals as an example. In some embodiments, the communication system 100 may include a plurality of network devices, and in a coverage area of each network device, another quantity of terminals may be included. This is not limited in some embodiments.

In some embodiments, the communication system 100 may further include a PCO, an access and mobility management object (AMO), and other network elements. This is not limited in some embodiments.

In a network/system in some embodiments, a device having a communication function may be referred to as a communication device. Using the communication system 100 shown in FIG. 1 as an example, the communication device may include a network device 110 and a terminal 120 that have a communication function. The network device 110 and the terminal 120 may be devices described above. Details are not described herein again.

The terms "system" and "network" may be interchangeably used. The term "and/or" describes only an association relationship for describing associated objects and represents that three relationships may exist. For example, A and/or B may represent the following three cases: Only A exists, both A and B exist, and only B exists.

FIG. 2 is a system architecture diagram of a 5G network according to some embodiments. As shown in FIG. 2, devices involved in the 5G network system include: a terminal (UE), a radio access network (RAN), a user plane object (UPO) (such as a "user plane function" (UPF)), a data network (DN), a mobility management object (AMO) (such as a "mobility management function" (AMF)), a session management object (SMO) (such as a "session management function" (SMF)), a PCO (such as a such as a "policy control function" (PCF)), an application object (AO) (such as an "application function" (AF)), an authentication server object (AUSO) (such as an "authentication server function" (AUSF)), and a unified data management (UDM).

A person skilled in the art would understand these objects could be implemented by hardware logic, a processor or processors executing computer software code, or a combination of both. The objects may also be implemented in software stored in a memory of a computer or a non-transitory computer-readable medium, where the instructions of each module and unit are executable by a processor to thereby cause the processor to perform the respective operations of the corresponding object.

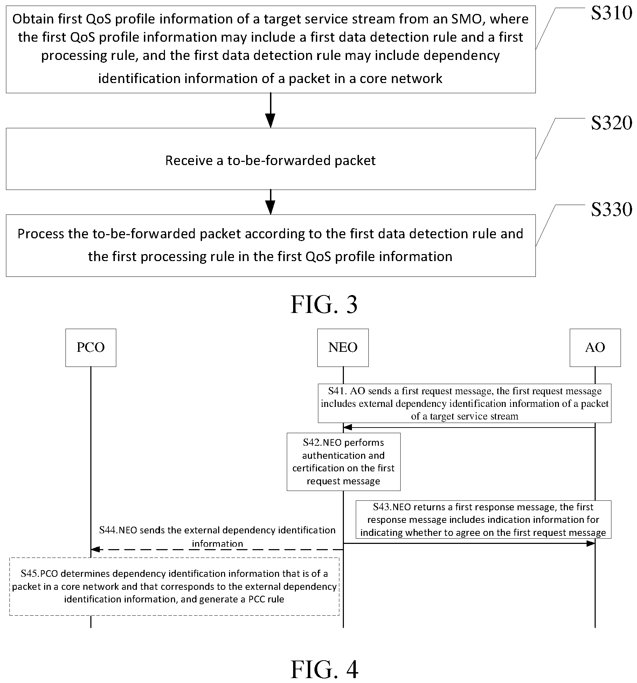

FIG. 3 is a flowchart of a packet transmission method according to some embodiments of the present disclosure. The method as illustrated in FIG. 3 may be performed by a network device (for example, base station), and a network device in some embodiments may be, for example, the network device 110 in FIG. 1, but the present disclosure is not limited thereto. Any communication device that may detect and process a packet may use the method provided in some embodiments.

As shown in FIG. 3, the method provided in some embodiments may include:
S310: Obtain first QoS profile information of a target service stream from an SMO, where the first QoS profile information may include a first data detection rule and a first processing rule, and the first data detection rule may include dependency identification information of a packet in a core network.

In some embodiments, the base station may receive the first QoS (Quality of Service) profile information of the target service stream from the SMO, and the first QoS profile information may include the first data detection rule and the first processing rule.

In some embodiments, the first data detection rule may include the dependency identification information of the packet in the core network. The dependency identification information of the packet in the core network refers to identification information that is determined by a network (for example, a PCO in the core network) and that is configured for indicating whether interdependency exists between different packets. This interdependency may be set according to an actual scenario requirement, for example, whether another packet may be correctly decoded and/or correctly received only in dependence on the to-be-forwarded packet.

In some embodiments, dependency identification information of a packet in the core network may be configured for indicating whether the to-be-forwarded packet is depended on by another packet and/or whether the to-be-forwarded packet depends on another packet. In each of the following exemplary descriptions, that dependency identification information of a packet in the core network is configured for indicating whether the to-be-forwarded packet is depended on by another packet is used as an example, but the present disclosure is not limited thereto.

In some embodiments, whether there is a close dependence relationship between different packets may be determined according to a configuration of an actual scenario. For example, if encoded image or video data is transmitted in a packet, whether there is a close dependence relationship between different packets may be determined according to whether reference may be made to another packet to decode the encoded image or video packet after a client side (which may correspond to a terminal side) or a service server side receives the encoded image or video packet. Different packets with a referring or referred relationship during decoding may be considered as having a close dependence relationship. Different packets with no referring or referred relationship during decoding may be considered as having no close dependence relationship.

For example, " 1" may be used for indicating the to-be-forwarded packet is depended on by another packet, and "0" may be used for indicating the to-be-forwarded packet is not depended on by another packet, that is, no other packet may be decoded and/or received in dependence on the to-be-forwarded packet.

In some embodiments, the target service stream refers to a service stream formed by transmitting, in a network, an uplink packet sent by a terminal and/or a downlink packet sent by a service server for one or some target services, and the target service may be set according to an actual requirement. For example, the target service may be a multimedia service, but the present disclosure is not limited thereto.

S320: Receive a to-be-forwarded packet.

In some embodiments, the to-be-forwarded packet may include an uplink packet sent by the terminal and received by the network device, and/or may include a downlink packet sent by the service server and received by the network device.

S330: Process the to-be-forwarded packet according to the first data detection rule and the first processing rule in the first QoS profile information.

In some embodiments, the processing the to-be-forwarded packet according to the first data detection rule and the first processing rule in the first QoS profile information may include: in response to congestion occurring in a network, transmitting the to-be-forwarded packet according to the first processing rule in response to determining that dependency identification information of the to-be-forwarded packet satisfies the first data detection rule; or discarding the to-be-forwarded packet according to the first processing rule if dependency identification information of the to-be-forwarded packet does not satisfy the first data detection rule.

In some embodiments, the base station may detect the received to-be-forwarded packet, to determine whether the received to-be-forwarded packet belongs to packets of the target service stream (including an uplink packet and a downlink packet), and based on determining that the received to-be-forwarded packet belongs to the packets of the target service stream, detect, by using the first data detection rule, whether the dependency identification information of the to-be-forwarded packet matches dependency identification information of a packet in the core network in the first data detection rule.

The determining that the dependency identification information of the to-be-forwarded packet matches dependency identification information of a packet in the core network in the first data detection rule indicates that the to-be-forwarded packet includes the dependency identification information of the packet in the core network and the dependency identification information of the packet in the core network included in the to-be-forwarded packet is the same as the dependency identification information of the packet in the core network in the first data detection rule.

The determining that the dependency identification information of the to-be-forwarded packet does not match dependency identification information of a packet in the core network in the first data detection rule indicates that the to-be-forwarded packet does not include the dependency identification information of the packet in the core network; or that although the to-be-forwarded packet includes the dependency identification information of the packet in the core network, the dependency identification information of the packet in the core network included in the to-be-forwarded packet is different from the dependency identification information of the packet in the core network in the first data detection rule.

In some embodiments, the first processing rule may be configured for instructing the network device, in response to congestion occurring in a network, to preferentially transmit the to-be-forwarded packet if it is detected that the dependency identification information of the to-be-forwarded packet satisfies the first data detection rule, and discard another packet that does not satisfy the first data detection rule; or preferentially discard the to-be-forwarded packet compared with another packet satisfying the first packet detection rule if the network device detects that the dependency identification information of the to-be-forwarded packet does not satisfy the first data detection rule.

For different packets with a close dependence relationship, if the to-be-forwarded packet depended on by another packet is lost for a reason such as congestion, it is possible that decoding of an image or a video corresponding to the another packet in dependence on the to-be-forwarded packet cannot be completed on the client side or server side. In an aspect, in some embodiments, the dependency identification information of the packet in the core network is set in the first data detection rule, and is configured for detecting whether the received to-be-forwarded packet is depended on by another packet. If the to-be-forwarded packet is depended on by another packet, the to-be-forwarded packet is preferentially transmitted according to the first data processing rule, thereby ensuring that the another packet in dependence on the to-be-forwarded packet may be correctly received and/or decoded, reducing impact on decoding on the client or server side, and ensuring service experience of a target service such as a multimedia service as much as possible. In another aspect, in some embodiments, the to-be-forwarded packet that is not depended on by another packet may be further preferentially discarded through the first data detection rule and the first processing rule in response to congestion occurring in a network, thereby alleviating a network congestion status, reducing occupied transmission resources, and optimizing packet network transmission.

The first data detection rule and the first processing rule may be merged into the same rule, or may be divided into different rules, or may be used as a part of another rule, or may be used as a part of a QoS profile. According to different execution entities, the rule may have different names. This is not limited in the present disclosure.

In some embodiments, the first data detection rule may further include an uplink/downlink validity indication, and the uplink/downlink validity indication may be configured for indicating whether the first data detection rule is valid for an uplink packet, or valid for a downlink packet, or valid for both an uplink packet and a downlink packet.

In some embodiments, the network device may determine whether the first data detection rule is valid for an uplink service stream, a downlink service stream, or an uplink service stream and a downlink service stream of the target service stream according to the uplink/downlink validity indication; and process, in response to determining that the first data detection rule is valid for a downlink service stream, the to-be-forwarded packet according to the first data detection rule and the first processing rule in the first QoS profile information based on determining that the to-be-forwarded packet belongs to the downlink service stream of the target service stream; process, in response to determining that the first data detection rule is valid for an uplink service stream, the to-be-forwarded packet according to the first data detection rule and the first processing rule in the first QoS profile information based on determining that the to-be-forwarded packet belongs to the uplink service stream of the target service stream; or separately detect, in response to determining that the first data detection rule is valid for an uplink service stream and a downlink service stream, the uplink service stream and the downlink service stream of the target service stream, and process the to-be-forwarded packet according to the first data detection rule and the first processing rule in the first QoS profile information.

Through the uplink/downlink validity indication, network transmission of the packet of the target service stream may be detected and processed more accurately.

In the packet transmission method in some embodiments, a network device obtains first QoS profile information of a target service stream from an SMO, the first QoS profile information including a first data detection rule and a first processing rule, and the first data detection rule carrying dependency identification information of a packet in a core network, so that in response to receiving a to-be-forwarded packet, the network device can determine, according to the first data detection rule and the first processing rule in the first QoS profile information, how to process the to-be-forwarded packet, to optimize a network transmission process of the to-be-forwarded packet.

According to some embodiments, FIG. 4 shows a schematic diagram of an AO interaction service requirement in response to packets not being grouped. As shown in FIG. 4, the method provided in some embodiments may include:
S41: An AO sends a first request message to a network exposure object (NEO) (such as a network exposure function (NEF)), where the first request message may include external dependency identification information of a packet of a target service stream.

In some embodiments, the first request message may include association information of the packet, to determine whether the packet may be discarded or continue to be transmitted in network transmission.

For example, the association information of the packet may include the external dependency identification information of the packet of the target service stream. The AO determines the external dependency identification information of the packet of the target service stream.

In some embodiments, the external dependency identification information of the packet of the target service stream refers to identification information that is determined by the AO or the NEO and that is configured for indicating whether interdependency exists between different packets. This interdependency may be set according to an actual scenario requirement, for example, interdependency of the to-be-forwarded packet is set according to whether another packet may be correctly decoded and/or correctly received only in dependence on the to-be-forwarded packet. The external dependency identification information is not configured for distinguishing between intra-group dependence and inter-group dependence, but is configured for identifying whether dependence between packets exists.

In some embodiments, the first request message may be further configured for identifying one or more packets that depend on the packet.

In some embodiments, the first request message sent by the AO to the NEO may further include at least one of AO identification information (represented with AO ID), target service stream template information, target data network name (DNN) information and/or target single-network slice selection assistance information (S-NSSAI) information of the target service stream, and the like, which may reduce the quantity of times of interaction between the AO and the NEO.

In some embodiments, the first request message sent by the AO to the NEO may not include target service stream template information, target DNN information and/or target S-NSSAI information of the target service stream, and the like. The AO may send the AO ID, the target service stream template information, the target DNN information of the target service stream, and/or the target S-NSSAI information to the NEO through another message in advance, and the NEO may store the AO ID in association with the target service stream template information, the target DNN information and/or the target S-NSSAI information of the target service stream, and the like. In response to receiving the first request message, the NEO may search according to the AO ID carried in the first request message, to obtain the target DNN information and/or the target S-NSSAI information of the target service stream and the like, thereby reducing the amount of data carried in the first request message.

In some embodiments, the target service stream template information may include one or more of a source IP address (source network address), a source port number, a destination IP address (destination network address), a destination port number, a fully qualified domain name (FQDN), an application identity (APP ID), and the like of the target service stream.

S42: After receiving the first request message sent by the AO, the NEO performs authentication and certification on the first request message.

S43: The NEO returns a first response message to the AO, where the first response message may include indication information for indicating whether to agree on the first request message.

In some embodiments, the AO may send the first request message to the NEO, where the first request message may carry association information of the foregoing packet; and after receiving the first request message sent by the AO, the NEO may perform authentication and certification on the first request message, generate the corresponding first response message, and return the first response message to the AO.

The first response message may include the indication information for indicating whether the first request message is agreed on. If authentication and certification on the first request message succeed, the indication information indicates that the first request message is agree on; or if authentication and certification on the first request message fail, the indication information indicates that the first request message is refused, and in some embodiments, may further include a refusal reason value.

S44: The NEO sends the external dependency identification information to a PCO directly or indirectly.

In some embodiments, after authentication and certification performed by the NEO on the foregoing first request message succeed, the NEO may then send the association information of the packet, the target service stream template information, the target DNN information and/or the target S-NSSAI information of the target service stream, and the like that are carried in the first request message to the PCO.

S45: After receiving the external dependency identification information sent by the NEO, the PCO may determine, according to the external dependency identification information, dependency identification information that is of a packet in a core network and that corresponds to the external dependency identification information, and generate a first policy and charging control (PCC) rule according to the external dependency identification information and the dependency identification information that is of the packet in the core network and that corresponds to the external dependency identification information; and add the external dependency identification information and the dependency identification information that is of the packet in the core network and that corresponds to the external dependency identification information to the first PCC rule, and then send the first PCC rule to an SMO.

In some embodiments, the SMO may generate a target service stream template according to the target service stream template information. The PCO may obtain the target service stream template information from the first request message sent by the AO, or may obtain the target service stream template information in another manner. This is not limited in the present disclosure.

In some embodiments, the target service stream template may include one or more of a source IP address, a source port number, a destination IP address, a destination port number, an FQDN, an APP ID, an IP (Internet Protocol) protocol, and the like.

In some embodiments, the first data detection rule may indicate whether the first data detection rule is valid for an uplink service stream, or valid for a downlink service stream, or valid for both an uplink service stream and a downlink service stream, that is, the first data detection rule may further include the foregoing uplink/downlink validity indication.

For example, the target service stream template of the first data detection rule may include an FQDN, and whether the first data detection rule is valid for an uplink service stream, or valid for a downlink service stream, or valid for both an uplink service stream and a downlink service stream may be further indicated through the foregoing uplink/downlink validity indication.

In some embodiments, the SMO may define different data detection rules, and one data detection rule of or a combination of several data detection rules may be used as the first data detection rule.

In some embodiments, the SMO may reuse a packet detection rule (PDR) as the first data detection rule, that is, the dependency identification information of the packet in the core network is added to a PDR rule. A PDR rule to which the dependency identification information of the packet in the core network is added and how to add the dependency identification information of the packet in the core network to a PDR rule may be flexibly set. In another embodiment, the SMO may alternatively add a first data detection rule and a first processing rule that are completely new.

In the packet transmission method in some embodiments, in an aspect, the AO may send the first request message to the NEO, and the first request message carries the external dependency identification information of the packet of the target service stream and the AO ID, so that the NEO does not need to designate the external dependency identification information of the packet of the target service stream, and a service server and/or a terminal may designate external dependency identification information of a packet of a personalized target service stream; and in another aspect, the NEO may further send the external dependency identification information of the packet of the target service stream to the PCO, and the PCO then generates the first PCC rule according to the external dependency identification information of the packet of the target service stream and sends the first PCC rule to the SMO, so that the SMO may generate the first QoS profile information according to the first PCC rule, and add the first data detection rule and the first processing rule to the first QoS profile information, which can optimize network transmission of a to-be-forwarded packet such as a media packet by using the first data detection rule and the first processing rule.

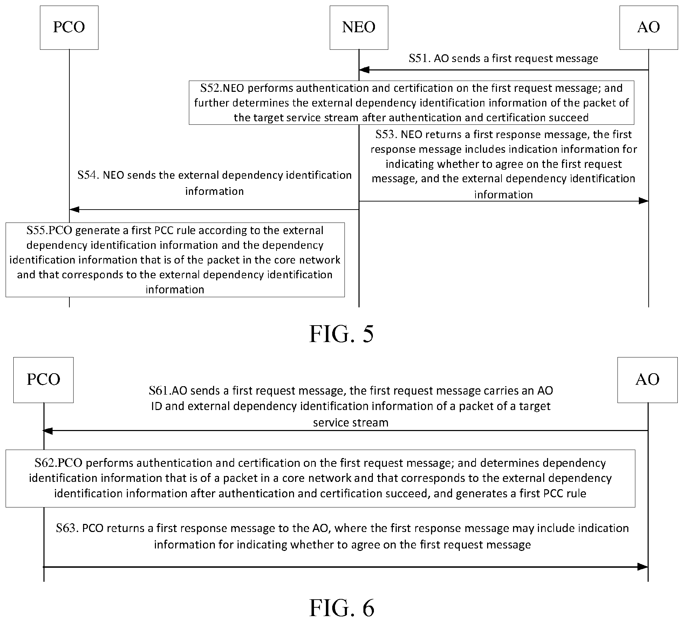

FIG. 5 is a schematic diagram of interaction of a packet transmission method according to another embodiment of the present disclosure.

As shown in FIG. 5, the method provided in some embodiments may include:
S51: An AO sends a first request message to an NEO, where the first request message does not carry external dependency identification information of a packet of a target service stream, but the first request message carries an AO ID.

In this embodiment of FIG. 5, the first request message sent by the AO to the NEO may not carry the external dependency identification information of the packet of the target service stream, that is, the first request message is configured by the AO to instruct the NEO to determine the external dependency identification information of the packet of the target service stream.

In some embodiments, the first request message may further include at least one of target service stream template information, target DNN information, and/or target S-NSSAI information, which may reduce the quantity of times of interaction between the AO and the NEO.

In some embodiments, the first request message sent by the AO to the NEO may not include target service stream template information, target DNN information and/or target S-NSSAI information of the target service stream, and the like. The AO may send the AO ID, the target service stream template information, the target DNN information of the target service stream, and/or the target S-NSSAI information to the NEO through another message in advance, and the NEO may store the AO ID in association with the target service stream template information, the target DNN information and/or the target S-NSSAI information of the target service stream, and the like. In response to receiving the first request message, the NEO may search according to the AO ID carried in the first request message, to obtain the target DNN information and/or the target S-NSSAI information of the target service stream and the like, thereby reducing the amount of data carried in the first request message.

S52: The NEO receives the first request message sent by the AO, and performs authentication and certification on the first request message; and may further determine the external dependency identification information of the packet of the target service stream after authentication and certification succeed.

S53: The NEO returns a first response message to the AO, where the first response message may include indication information for indicating whether to agree on the first request message, and the first response message may further include the external dependency identification information.

S54: The NEO sends the external dependency identification information to a PCO directly or indirectly.

S55: After receiving the external dependency identification information sent by the NEO, the PCO may determine, according to the external dependency identification information, dependency identification information that is of a packet in a core network and that corresponds to the external dependency identification information, and generate a first PCC rule according to the external dependency identification information and the dependency identification information that is of the packet in the core network and that corresponds to the external dependency identification information.

In the packet transmission method in some embodiments, the first request message sent by the AO does not include the external dependency identification information of the packet of the target service stream, and the NEO designates the external dependency identification information of the packet of the target service stream, thereby avoiding a problem that a conflict occurs between external dependency identification information of packets of target service streams configured by different AOs.

Although an example in which the AO exchanges information with the PCO through the NEO is used in each embodiment of FIG. 4 and FIG. 5, the present disclosure is not limited thereto. In another embodiment, the AO may alternatively directly communicate with the PCO, that is, the PCO obtains association information of a packet directly from the AO; and the NEO may alternatively store information requested by the AO in a unified data repository (UDR), and the PCO may receive the information from the UDR.

FIG. 6 is a schematic diagram of interaction of a packet transmission method according to still another embodiment of the present disclosure.

As shown in FIG. 6, the method provided in some embodiments may include:
S61: An AO sends a first request message to a PCO, where the first request message carries an AO ID and external dependency identification information of a packet of a target service stream.

In some embodiments, the first request message may further include at least one of target service stream template information, target DNN information, and/or target S-NSSAI information, and the like, thereby reducing the quantity of times of interaction between the AO and the PCO.

In some embodiments, the first request message may not include the target service stream template information, the target DNN information, and/or the target S-NSSAI information, and the like, but instead the target service stream template information, the target DNN information, and/or the target S-NSSAI information, and the like are sent to the PCO in advance. The PCO stores the target service stream template information, the target DNN information, and/or the target S-NSSAI information, and the like in association with the AO ID, which are obtained conveniently through search after the first request message is received, thereby reducing the amount of data carried in the first request message.

S62: The PCO receives the first request message sent by the AO, and performs authentication and certification on the first request message; and determines dependency identification information that is of a packet in a core network and that corresponds to the external dependency identification information after authentication and certification succeed, and generates a first PCC rule.

S63: The PCO returns a first response message to the AO, where the first response message may include indication information for indicating whether to agree on the first request message.

In some embodiments, the AO may be a function unit abstracted from a service server.

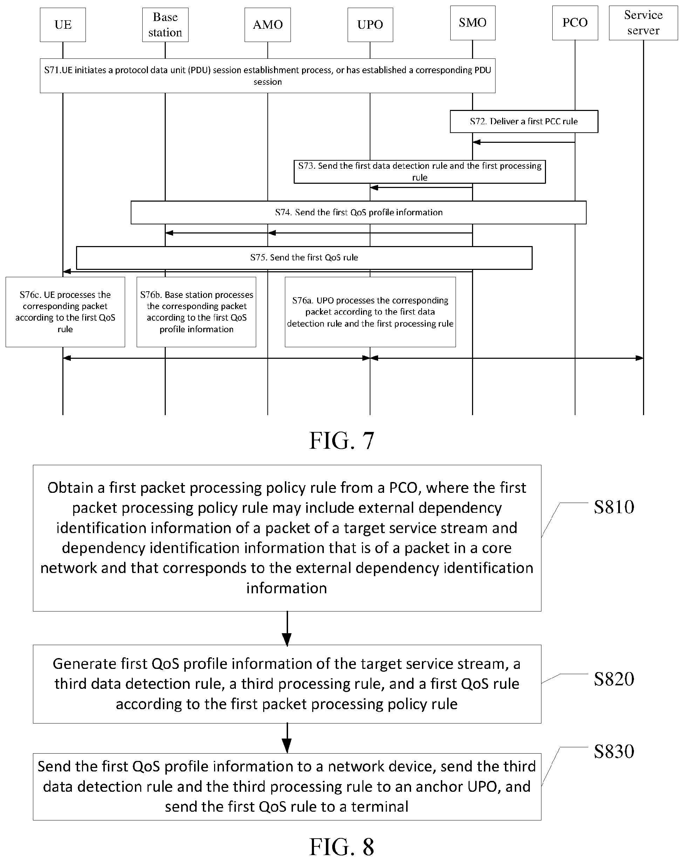

FIG. 7 is a schematic diagram of policy enforcement on a network side. In According to some embodiments, FIG. 7, an example in which a UE is used as a terminal and a base station is used as a network device is taken. As shown in FIG. 7, the method provided in some embodiments may include:
S71: A UE initiates a protocol data unit (PDU) session establishment process, or a UE has established a corresponding PDU session.

In some embodiments, the UE has established a PDU session (for example, target DNN or target S-NSSAI) of the target service, or the UE initiates a PDU session establishment process (for example, for target DNN or target S-NSSAI) of the target service.

S72: A PCO delivers a first PCC rule to an SMO.

In some embodiments, the first PCC rule may include external dependency identification information of a packet of a target service stream and dependency identification information that is of a packet in a core network and that corresponds to the external dependency identification information.

S73: The SMO receives the first PCC rule delivered by the PCO, generates a first data detection rule and a first processing rule according to the external dependency identification information of the packet of the target service stream and the dependency identification information that is of the packet in the core network and that corresponds to the external dependency identification information that are carried in the first PCC rule, and generates first QoS profile information according to the first data detection rule and the first processing rule, where the first QoS profile information may include the first data detection rule and the first processing rule, and the first data detection rule may include the dependency identification information of the packet in the core network; and sends the first data detection rule and the first processing rule to a UPO, where the UPO herein may be an anchor UPO or may be an intermediate UPO.

In some embodiments, the SMO may further generate a third data detection rule and a third processing rule according to the first PCC rule, where the third data detection rule may include the external dependency identification information of the packet of the target service stream, and the third processing rule may include the dependency identification information that is of the packet in the core network and that corresponds to the external dependency identification information; and send the third data detection rule and the third processing rule to the anchor UPO, where the third data detection rule is configured for instructing the anchor UPO to detect whether external dependency identification information of a downlink packet received by the anchor UPO from a service server satisfies the external dependency identification information of the packet of the target service stream in the third data detection rule.

The third processing rule is configured for instructing the anchor UPO to, if the external dependency identification information of the downlink packet satisfies the external dependency identification information of the packet of the target service stream included in the third data detection rule, perform marking in a packet header of the downlink packet with the corresponding dependency identification information of the packet in the core network in the third processing rule during encapsulation of the downlink packet, encapsulate the downlink packet, and send the encapsulated downlink packet marked with the dependency identification information of the packet in the core network to the network device; or to, if the external dependency identification information of the downlink packet does not satisfy the external dependency identification information of the packet of the target service stream included in the third data detection rule (the external dependency identification information does not exist in the downlink packet, or the external dependency identification information exists, but is different from the external dependency identification information in the third data detection rule), not mark the downlink packet with the corresponding dependency identification information of the packet in the core network in the third processing rule during encapsulation of the downlink packet, and transmit the encapsulated downlink packet not marked with the dependency identification information of the packet in the core network to the network device.

S74: The SMO may further generate first QoS profile information according to the first PCC rule, and send the first QoS profile information to an AMO, where the first QoS profile information may include the first data detection rule and the first processing rule.

In some embodiments, the SMO sends the first QoS profile information or updated first QoS profile information to the AMO, and the first QoS profile information includes the first data detection rule and the first processing rule.

The AMO receives the first QoS profile information sent by the SMO, and sends the first QoS profile information to the base station.

The base station receives the first QoS profile information sent by the AMO.

In some embodiments, the base station is a point prone to congestion, and therefore the first QoS profile information may be configured in the base station, to detect and process an uplink packet sent by the UE and a downlink packet sent by the service server separately.

S75: The SMO may further generate a first QoS rule according to the first PCC rule, where the first QoS rule may include the external dependency identification information of the packet of the target service stream and the dependency identification information that is of the packet in the core network and that corresponds to the external dependency identification information; and send the first QoS rule to the UE.

S76a: The UPO processes the corresponding packet according to the first data detection rule and the first processing rule.

The intermediate UPO and/or the anchor UPO processes the target service stream according to the first data detection rule and the first processing rule. For a processing process, reference may be made to the foregoing process in which the network device processes the to-be-forwarded packet by using the first QoS profile information.

In some embodiments, the UPO is a point prone to congestion, and therefore the first data detection rule and the first processing rule may be configured in the UPO, to detect and process an uplink packet sent by the UE or a downlink packet sent by the service server.

The anchor UPO may further receive the third data detection rule and the third processing rule, and determine whether external dependency identification information of a downlink packet received from a service server satisfies the external dependency identification information of the packet of the target service stream in the third data detection rule.

When detecting that the external dependency identification information of the downlink packet received by the anchor UPO satisfies the external dependency identification information of the packet of the target service stream included in the third data detection rule, the anchor UPO may perform marking in a packet header of the downlink packet with the corresponding dependency identification information of the packet in the core network in the third processing rule during encapsulation of the downlink packet, encapsulate the downlink packet, and send the encapsulated downlink packet marked with the dependency identification information of the packet in the core network to the network device; or when detecting that the external dependency identification information of the downlink packet received by the anchor UPO does not satisfy the external dependency identification information of the packet of the target service stream included in the third data detection rule, the anchor UPO may not mark the downlink packet with the corresponding dependency identification information of the packet in the core network in the third processing rule during encapsulation of the downlink packet, encapsulate the downlink packet, and transmit the encapsulated downlink packet not marked with the dependency identification information of the packet in the core network to the network device.

For example, the anchor UPO may perform GPRS Tunneling Protocol (GTP) encapsulation on the downlink packet, and perform marking in the packet header of the downlink packet with the dependency identification information of the packet in the core network, to be configured by the base station to determine a downlink packet which is preferentially discarded or preferentially transmitted.

S76b: The base station processes the corresponding packet according to the first QoS profile information.

For a processing process, reference may be made to the description of the foregoing embodiments.

S76c: The UE processes the corresponding packet according to the first QoS rule.

After receiving the first QoS rule, if it is detected that the external dependency identification information of the uplink packet to be sent by the UE satisfies the external dependency identification information of the packet of the target service stream included in the first QoS rule, the UE may mark the uplink packet in a packet header of the uplink packet with the corresponding dependency identification information of the packet in the core network in the first QoS rule, and send the uplink packet marked with the dependency identification information of the packet in the core network to the network device; or when detecting that the external dependency identification information of the uplink packet does not satisfy the external dependency identification information of the packet of the target service stream included in the first QoS rule, the UE may not mark the uplink packet with the corresponding dependency identification information of the packet in the core network in the first QoS rule, but directly transmit the uplink packet to the network device.

An execution sequence of S73, S74, and S75 in the embodiment of FIG. 7 is not limited and may alternatively be executed in parallel. An execution sequence of S76a, S76b, and S76c is not limited and may alternatively be executed in parallel.

In the packet transmission method in some embodiments, network transmission of a packet such as a media packet is optimized, and when different packets have a close dependence relationship, if a packet that is depended on is lost for a reason such as congestion, decoding of an image or a video corresponding to another packet in dependence on the packet cannot be completed on the client side or service server side. Therefore, the network may perform corresponding transmission optimization, to ensure service experience of a target service such as a multimedia service as much as possible while lessening data transmission load on the network.

FIG. 8 is a flowchart of a packet transmission method according to another embodiment of the present disclosure. The method as illustrated in FIG. 8 may be performed by an SMO.

As shown in FIG. 8, the method provided in some embodiments may include:
S810: Obtain a first packet processing policy rule from a PCO, where the first packet processing policy rule may include external dependency identification information of a packet of a target service stream and dependency identification information that is of a packet in a core network and that corresponds to the external dependency identification information.

S820: Generate first QoS profile information of the target service stream, a third data detection rule, a third processing rule, and a first QoS rule according to the first packet processing policy rule, where the first QoS profile information may include a first data detection rule and a first processing rule, the first data detection rule may include the dependency identification information, the first QoS rule may include the external dependency identification information and the dependency identification information that is of the packet in the core network and that corresponds to the external dependency identification information, and the third data detection rule and the third processing rule may include the external dependency identification information and the dependency identification information that is of the packet in the core network and that corresponds to the external dependency identification information respectively.

S830: Send the first QoS profile information to a network device, send the third data detection rule and the third processing rule to an anchor UPO, and send the first QoS rule to a terminal.

For other content of this embodiment of FIG. 8, reference may be made to the foregoing other embodiments.

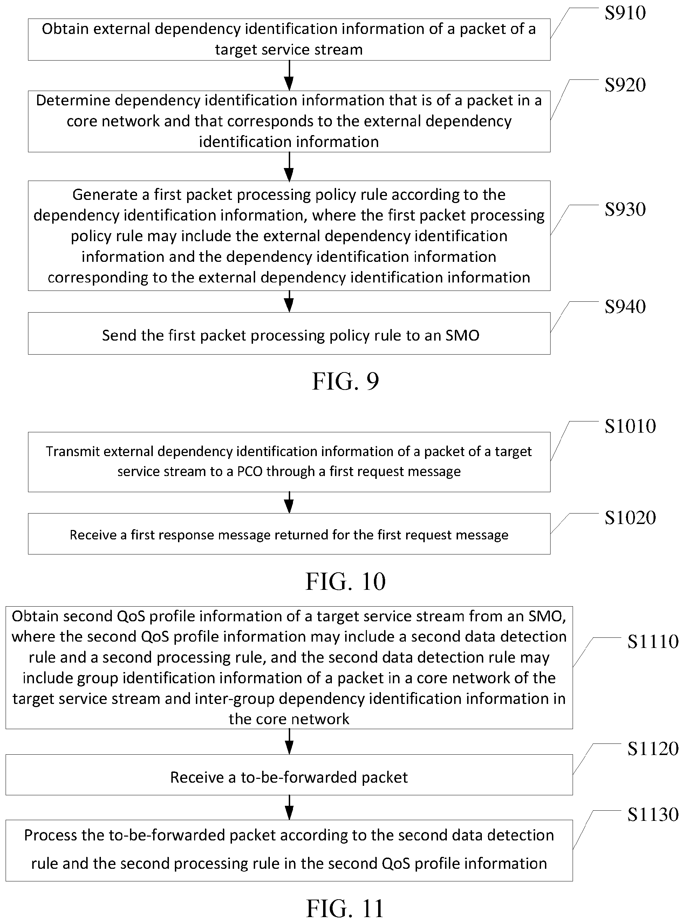

FIG. 9 is a flowchart of a packet transmission method according to still another embodiment of the present disclosure. The method as illustrated in FIG. 9 may be performed by a PCO.

As shown in FIG. 9, the method provided in some embodiments may include:
S910: Obtain external dependency identification information of a packet of a target service stream.

S920: Determine dependency identification information that is of a packet in a core network and that corresponds to the external dependency identification information.

S930: Generate a first packet processing policy rule according to the dependency identification information, where the first packet processing policy rule may include the external dependency identification information and the dependency identification information corresponding to the external dependency identification information.

S940: Send the first packet processing policy rule to an SMO.

For other content of this embodiment of FIG. 9, reference may be made to the foregoing other embodiments.

FIG. 10 is a flowchart of a packet transmission method according to still another embodiment of the present disclosure. The method as illustrated in FIG. 10 may be performed by an AO.

As shown in FIG. 10, the method provided in some embodiments may include:
S1010: Transmit external dependency identification information of a packet of a target service stream to a PCO through a first request message.

S1020: Receive a first response message returned for the first request message.

The first request message may be configured for instructing the PCO to determine dependency identification information of a packet in a core network corresponding to the external dependency identification information according to the external dependency identification information, and generate a first packet processing policy rule, and the first packet processing policy rule may include the external dependency identification information and the dependency identification information.

For other content of this embodiment of FIG. 10, reference may be made to the foregoing other embodiments.

Further, an embodiment of the present disclosure further provides a packet transmission method. The method may be performed by a UPO (which may be an anchor UPO or an intermediate UPO), and the method may include: obtaining a first data detection rule and a first processing rule of a target service stream from an SMO, where the first data detection rule may include dependency identification information of a packet in a core network; receiving a to-be-forwarded packet; and processing the to-be-forwarded packet according to the first data detection rule and the first processing rule.

FIG. 11 is a flowchart of a packet transmission method according to some embodiments of the present disclosure. The method as illustrated in FIG. 11 may be performed by a network device (for example, base station), and a network device in some embodiments may be, for example, the network device 110 in FIG. 1, but the present disclosure is not limited thereto. Any communication device that may detect and process a packet may use the method provided in some embodiments.

As shown in FIG. 11, the method provided in some embodiments may include:

S1110: Obtain second QoS profile information of a target service stream from an SMO, where the second QoS profile information may include a second data detection rule and a second processing rule, and the second data detection rule may include group identification information of a packet in a core network of the target service stream and inter-group dependency identification information in the core network.

In some embodiments, the base station may receive the second QoS profile information of the target service stream from the SMO, and the second QoS profile information may include the second data detection rule and the second processing rule.

In some embodiments, the second data detection rule may include group identification information of a packet in a core network of the target service stream and inter-group dependency identification information in the core network.

The group identification information of the packet in the core network refers to identification information that is determined by a network, for example, a PCO in the core network and that is configured for indicating groups to which different packets belong.

In some embodiments, packets may be grouped in various proper manners. For example, grouping may be performed according to dependency between packets, packets having a dependence relationship may be placed into the same group, and packets having no dependence relationship may be placed into different groups. For another example, grouping may be performed according to different characteristics of packets, packets having the same characteristic or similar characteristics are placed into the same group, and packets having different characteristics are placed into different groups. For example, audio packets are placed into the same group, and video packets are placed into the same group; or in video packets, I frames are placed into the same group, P frames are placed into another group, and B frames are placed into still another group. For another example, grouping may alternatively be performed according to importance degrees of packets, key information in a target service stream is placed into the same group, and non-key information is placed into another group. Alternatively, packets with key information and non-key information having a dependence relationship in a target service stream may be placed into a group, packets with other key information and non-key information having a dependence relationship may be placed into another group, the quantity of groups is not limited, and the several groups may have a dependency or may not have a dependency between each other. The grouping manner is not limited in the present disclosure.

The inter-group dependency identification information of the packet in the core network refers to identification information that is determined by a network, for example, a PCO in the core network and that is configured for indicating, when different packets belong to different groups respectively, whether the packets in the different groups have interdependency between each other. This interdependency may be set according to an actual scenario requirement, for example, whether a packet in another group may be correctly decoded and/or correctly received only in dependence on a to-be-forwarded packet in the another group.

For example, assuming that a packet 1 belongs to a group 1 and a packet 2 belongs to a group 2, if the packet 2 is decoded in dependence on the packet 1, it is considered that packets in the group 1 and the group 2 have dependency between each other. In this case, group identification information of the group 1 and the inter-group dependency identification information of the packet in the core network may be included in a packet header of the packet 1, to indicate that the packet 1 belongs to the group 1, and the packet 1 is depended on by a packet in another group. In some embodiments, the packet header of the packet 1 may further indicate a group by which the packet is depended on. Further, the packet header of the packet 1 may further indicate one or more packets in a group by which the packet is depended on. For example, the packet header of the packet 1 may further include group identification information of the group 2 and identification information of the packet 2 (for example, a frame number, but the present disclosure is not limited thereto).

In some embodiments, inter-group dependency identification information of a packet in the core network may be configured for indicating whether the to-be-forwarded packet is depended on by a packet in another group and/or whether the to-be-forwarded packet depends on a packet in another group. In each of the following exemplary descriptions, that inter-group dependency identification information of a packet in the core network is configured for indicating whether the to-be-forwarded packet is depended on by a packet in another group is used as an example, but the present disclosure is not limited thereto.

In some embodiments, the second data detection rule may further include dependency data group internal indication information. The dependency data group internal indication information refers to identification information that is determined by a network, for example, a PCO in the core network and that may be configured for distinguishing whether the received to-be-forwarded packet belongs to the dependency data group.

In some embodiments, how to perform grouping may be determined according to whether there is a close dependence relationship between different packets. For example, a plurality of packets having a close dependence relationship are placed into the same group, and corresponding group identification information is allocated to the packets in the group; and dependency data group internal indication information may be further added to the packets in the group, to indicate that the packets in the group are grouped according to the dependence relationship between the packets.

S 1120: Receive a to-be-forwarded packet.

S1130: Process the to-be-forwarded packet according to the second data detection rule and the second processing rule in the second QoS profile information.

In some embodiments, the processing the to-be-forwarded packet according to the second data detection rule and the second processing rule in the second QoS profile information may include: in response to congestion occurring in a network, transmitting the to-be-forwarded packet according to the second processing rule in response to determining that group identification information and inter-group dependency identification information of the to-be-forwarded packet satisfy the second data detection rule; or discarding the to-be-forwarded packet according to the second processing rule in response to determining that group identification information of the to-be-forwarded packet satisfies the second data detection rule and inter-group dependency identification information of the to-be-forwarded packet does not satisfy the second data detection rule.

In some embodiments, the base station may detect the received to-be-forwarded packet, to determine whether the received to-be-forwarded packet belongs to packets of the target service stream (including an uplink packet and a downlink packet), and based on determining that the received to-be-forwarded packet belongs to the packets of the target service stream, detect, by using the second data detection rule, whether the packet group identification information and the inter-group dependency identification information of the to-be-forwarded packet satisfy group identification information and inter-group dependency identification information of a packet in the core network in the second data detection rule.

The determining that the packet group identification information and the inter-group dependency identification information of the to-be-forwarded packet satisfy packet group identification information and inter-group dependency identification information of a packet in the core network in the second data detection rule indicates that the to-be-forwarded packet includes the packet group identification information and the inter-group dependency identification information of the packet in the core network and the packet group identification information and the inter-group dependency identification information of the packet in the core network included in the to-be-forwarded packet are the same as the packet group identification information and the inter-group dependency identification information of the packet in the core network in the first data detection rule.

The determining that the dependency identification information of the to-be-forwarded packet does not satisfy packet group identification information and inter-group dependency identification information of a packet in the core network in the second data detection rule indicates that the to-be-forwarded packet does not include the packet group identification information and the inter-group dependency identification information of the packet in the core network; or that although the to-be-forwarded packet includes the packet group identification information and the inter-group dependency identification information of the packet in the core network, the packet group identification information and the inter-group dependency identification information of the packet in the core network included in the to-be-forwarded packet are different from the packet group identification information and the inter-group dependency identification information of the packet in the core network in the first data detection rule.

In some embodiments, the second processing rule may be configured for instructing the network device, in response to congestion occurring in a network, to preferentially transmit the to-be-forwarded packet if it is detected that the packet group identification information and the inter-group dependency identification information of the to-be-forwarded packet satisfy the second data detection rule, and discard another packet that does not satisfy the second data detection rule; or preferentially discard the to-be-forwarded packet compared with another packet satisfying the second packet detection rule if it is detected that the dependency identification information of the to-be-forwarded packet does not satisfy the second data detection rule.

In some embodiments, the second data detection rule may further include intra-group dependency identification information in the core network.

The intra-group dependency identification information of the packet in the core network refers to identification information that is determined by a network, for example, a PCO in the core network and that is configured for indicating, when different packets belong to the same group, whether the different packets have interdependency between each other.

For example, assuming that both a packet 1 and a packet 3 belong to a group 1, if the packet 3 is decoded in dependence on the packet 1, it is considered that the packet 1 and the packet 3 have dependency between each other. In this case, group identification information of the group 1 and the intra-group dependency identification information of the packet in the core network may be included in a packet header of the packet 1, to indicate that the packet 1 belongs to the group 1, and the packet 1 is depended on by another packet in the group 1. In some embodiments, the packet header of the packet 1 may further indicate one or more packets in the group 1 by which the packet is depended on. For example, the packet header of the packet 1 may further include identification information of the packet 3.

The transmitting the to-be-forwarded packet according to the second processing rule in response to determining that group identification information and inter-group dependency identification information of the to-be-forwarded packet satisfy the second data detection rule may include: transmitting the to-be-forwarded packet according to the second processing rule in response to determining that the group identification information, the inter-group dependency identification information, and intra-group dependency identification information of the to-be-forwarded packet satisfy the second data detection rule.

In some embodiments, the base station may detect the received to-be-forwarded packet, to determine whether the received to-be-forwarded packet belongs to packets of the target service stream (including an uplink packet and a downlink packet), and based on determining that the received to-be-forwarded packet belongs to the packets of the target service stream, detect, by using the second data detection rule, whether the packet group identification information, the inter-group dependency identification information, and the intra-group dependency identification information of the to-be-forwarded packet satisfy group identification information, inter-group dependency identification information, and intra-group dependency identification information of a packet in the core network in the second data detection rule.

In some embodiments, the second processing rule may be configured for instructing the network device, in response to congestion occurring in a network, to preferentially transmit the to-be-forwarded packet in which both inter-group dependence and intra-group dependence exist if it is detected that each of the group identification information, the inter-group dependency identification information, and the intra-group dependency identification information of the to-be-forwarded packet satisfies the second data detection rule; or preferentially discard, in response to congestion occurring in a network, the to-be-forwarded packet in which neither inter-group dependence nor intra-group dependence exists if it is detected that none of the group identification information, the inter-group dependency identification information, and the intra-group dependency identification information of the to-be-forwarded packet satisfies the second data detection rule.

In some embodiments, the second processing rule may be configured for instructing the network device, in response to congestion occurring in a network, to if the network congestion status may be alleviated after the packet in which neither inter-group dependence nor intra-group dependence exists is discarded, not continue to discard the to-be-forwarded packet in which inter-group dependence exists but intra-group dependence does not exist, and not continue to discard the to-be-forwarded packet in which inter-group dependence does not exist but intra-group dependence exists.

If the network congestion status cannot be relieved after the packet in which neither inter-group dependence nor intra-group dependence exists is discarded, the second processing rule may further instruct the network device to preferentially discard, when it is detected that both the group identification information and the inter-group dependency identification information of the to-be-forwarded packet satisfy the second data detection rule but the intra-group dependency identification information of the to-be-forwarded packet does not satisfy the second packet detection rule (that is, in the to-be-forwarded packet, inter-group dependence exists, but intra-group dependence does not exist), another packet in which intra-group dependence exists but inter-group dependence does not exist compared with another packet whose group identification information and intra-group dependency identification information satisfy the second packet detection rule but whose inter-group dependency identification information does not satisfy the second packet detection rule.

If the network congestion status cannot be relieved after the another packet in which intra-group dependence exists but inter-group dependence does not exist is discarded, the second processing rule may further instruct the network device to continue to discard the to-be-forwarded packet in which inter-group dependence exists but intra-group dependence does not exist.

In some other embodiments, If the network congestion status cannot be relieved after the packet in which neither inter-group dependence nor intra-group dependence exists is discarded, the second processing rule may further instruct the network device to preferentially discard, when it is detected that both the group identification information and the inter-group dependency identification information of the to-be-forwarded packet satisfy the second data detection rule but the intra-group dependency identification information of the to-be-forwarded packet does not satisfy the second packet detection rule (that is, in the to-be-forwarded packet, inter-group dependence exists, but intra-group dependence does not exist), the to-be-forwarded packet in which inter-group dependence exists but intra-group dependence does not exist compared with another packet whose group identification information and intra-group dependency identification information satisfy the second packet detection rule but whose inter-group dependency identification information does not satisfy the second packet detection rule.

If the network congestion status cannot be relieved after the to-be-forwarded packet in which inter-group dependence exists but intra-group dependence does not exist is discarded, the second processing rule may further instruct the network device to continue to discard the another packet in which intra-group dependence exists but inter-group dependence does not exist.

For different packets with a close dependence relationship, if the to-be-forwarded packet depended on by another packet is lost for a reason such as congestion, it is possible that decoding of an image or a video corresponding to the another packet in dependence on the to-be-forwarded packet cannot be completed on the client side or server side. In an aspect, in some embodiments, the group identification information and the inter-group dependency identification information of the packet in the core network are set in the second data detection rule; and are configured for detecting a group to which the received to-be-forwarded packet belongs, and may further detect whether the to-be-forwarded packet is depended on by a packet in another group, and in some embodiments, may further detect whether the to-be-forwarded packet is depended on by another packet in the same group as that of the to-be-forwarded packet. If the to-be-forwarded packet is depended on by a packet in another group and/or another packet in the same group as that of the to-be-forwarded packet, whether to preferentially transmit the to-be-forwarded packet is determined according to the second data processing rule, thereby ensuring that the packet in the another group and/or the another packet in the same group in dependence on the to-be-forwarded packet may be correctly received and/or decoded, reducing impact on decoding on the client or server side, and ensuring service experience of a target service such as a multimedia service as much as possible. In another aspect, in some embodiments, the to-be-forwarded packet that is not depended on by the packet in the another group and/or not depended on by the another packet in the same group may be further preferentially discarded through the second data detection rule and the second processing rule in response to congestion occurring in a network, thereby alleviating a network congestion status, reducing occupied transmission resources, and optimizing packet network transmission.

The second data detection rule and the second processing rule may be merged into the same rule, or may be divided into different rules, or may be used as a part of another rule, or may be used as a part of a QoS profile. According to different execution entities, the rule may have different names. This is not limited in the present disclosure.

In some embodiments, the second data detection rule may further include an uplink/downlink validity indication, and the uplink/downlink validity indication may be configured for indicating whether the second data detection rule is valid for an uplink packet, or valid for a downlink packet, or valid for both an uplink packet and a downlink packet.

In some embodiments, the network device may determine whether the second data detection rule is valid for an uplink service stream, a downlink service stream, or an uplink service stream and a downlink service stream of the target service stream according to the uplink/downlink validity indication; and process, in response to determining that the second data detection rule is valid for a downlink service stream, the to-be-forwarded packet according to the second data detection rule and the second processing rule in the second QoS profile information based on determining that the to-be-forwarded packet belongs to the downlink service stream of the target service stream; process, in response to determining that the second data detection rule is valid for an uplink service stream, the to-be-forwarded packet according to the second data detection rule and the second processing rule in the second QoS profile information based on determining that the to-be-forwarded packet belongs to the uplink service stream of the target service stream; or separately detect, in response to determining that the second data detection rule is valid for an uplink service stream and a downlink service stream, the uplink service stream and the downlink service stream of the target service stream, and process the to-be-forwarded packet according to the second data detection rule and the second processing rule in the second QoS profile information.

Through the uplink/downlink validity indication, network transmission of the packet of the target service stream may be detected and processed more accurately.

In the packet transmission method in some embodiments, a network device obtains second QoS profile information of a target service stream from an SMO, the second QoS profile information including a second data detection rule and a second processing rule, and the second data detection rule carrying group identification information and inter-group dependency identification information of a packet in a core network, so that in response to receiving a to-be-forwarded packet, the network device can determine, according to the second data detection rule and the second processing rule in the second QoS profile information, how to process the to-be-forwarded packet, to optimize a network transmission process of the to-be-forwarded packet.

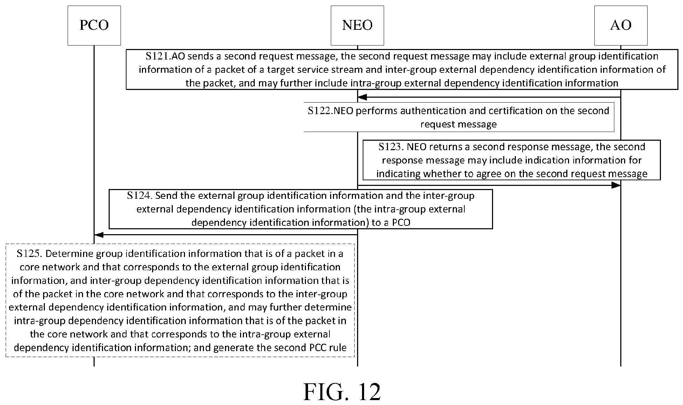

According to some embodiments, FIG. 12 shows a schematic diagram of an AO interaction service requirement when packets are grouped. As shown in FIG. 12, the method provided in some embodiments may include:
S121: An AO sends a second request message to an NEO, where the second request message may include external group identification information of a packet of a target service stream and inter-group external dependency identification information of the packet, and in some embodiments, may further include intra-group external dependency identification information.

In some embodiments, the second request message may include association information of the packet, which is related information configured for determining whether the packet may be discarded or continue to be transmitted in network transmission.

For example, the association information of the packet may include the external group identification information and the inter-group external dependency identification information of the packet of the target service stream. The AO determines the external group identification information and the inter-group external dependency identification information of the packet of the target service stream.

In some embodiments, the external group identification information of the packet of the target service stream refers to identification information that is determined by the AO or the NEO and that is configured for indicating a group to which the packet belongs.

In some embodiments, the inter-group external dependency identification information of the packet of the target service stream refers to identification information that is determined by the AO or the NEO and that is configured for indicating whether interdependency exists between different packets belonging to different groups. This interdependency may be set according to an actual scenario requirement, for example, whether another packet may be correctly decoded and/or correctly received only in dependence on the to-be-forwarded packet.

In some embodiments, the second request message sent by the AO to the NEO may further include at least one of AO identification information (represented with AO ID), target service stream template information, target DNN information and/or target S-NSSAI information of the target service stream, and the like, which may reduce the quantity of times of interaction between the AO and the NEO.

In some embodiments, the second request message sent by the AO to the NEO may not include target service stream template information, target DNN information and/or target S-NSSAI information of the target service stream, and the like. The AO may send the AO ID, the target service stream template information, the target DNN information of the target service stream, and/or the target S-NSSAI information to the NEO through another message in advance, and the NEO may store the AO ID in association with the target service stream template information, the target DNN information and/or the target S-NSSAI information of the target service stream, and the like. In response to receiving the second request message, the NEO may search according to the AO ID carried in the second request message, to obtain the target DNN information and/or the target S-NSSAI information of the target service stream and the like, thereby reducing the amount of data carried in the second request message.

S122: After receiving the second request message sent by the AO, the NEO performs authentication and certification on the second request message.

S123: The NEO returns a second response message to the AO, where the second response message may include indication information for indicating whether to agree on the second request message.

In some embodiments, the AO may send the second request message to the NEO, where the second request message may carry association information of the foregoing packet; and after receiving the second request message sent by the AO, the NEO may perform authentication and certification on the second request message, generate the corresponding second response message, and return the second response message to the AO.

The second response message may include the indication information for indicating whether the second request message is agreed on. If authentication and certification on the second request message succeed, the indication information indicates that the second request message is agree on; or if authentication and certification on the second request message fail, the indication information indicates that the second request message is refused, and in some embodiments, may further include a refusal reason value.

S124: The NEO sends the external group identification information and the inter-group external dependency identification information, and in some embodiments, the intra-group external dependency identification information to a PCO directly or indirectly.

In some embodiments, after authentication and certification performed by the NEO on the foregoing second request message succeed, the NEO may then send the association information of the packet, the target service stream template information, the target DNN information and/or the target S-NSSAI information of the target service stream, and the like that are carried in the second request message to the PCO.

In some embodiments, in S125, after receiving the external group identification information and the inter-group external dependency identification information, and in some embodiments, the intra-group external dependency identification information that are sent by the NEO, the PCO may determine, according to the external group identification information, group identification information that is of a packet in a core network and that corresponds to the external group identification information, and inter-group dependency identification information that is of the packet in the core network and that corresponds to the inter-group external dependency identification information, and in some embodiments, may further determine intra-group dependency identification information that is of the packet in the core network and that corresponds to the intra-group external dependency identification information; and may further generate the second PCC rule according to the external group identification information, group identification information that is of a packet in a core network and that corresponds to the external group identification information, the inter-group external dependency identification information, and inter-group dependency identification information that is of the packet in the core network and that corresponds to the inter-group external dependency identification information, and in some embodiments, according to the intra-group external dependency identification information and intra-group dependency identification information that is of the packet in the core network and that corresponds to the intra-group external dependency identification information, where the second PCC rule may carry the external group identification information, the group identification information that is of the packet in the core network and that corresponds to the external group identification information, the inter-group external dependency identification information, and the inter-group dependency identification information that is of the packet in the core network and that corresponds to the inter-group external dependency identification information, and in some embodiments, may further carry the intra-group external dependency identification information and the intra-group dependency identification information that is of the packet in the core network and that corresponds to the intra-group external dependency identification information, and then send the second PCC rule to the SMO.

In some embodiments, the SMO may generate a target service stream template according to the target service stream template information. The PCO may obtain the target service stream template information from the second request message sent by the AO, or may obtain the target service stream template information in another manner. This is not limited in the present disclosure.

In some embodiments, the second data detection rule may indicate whether the second data detection rule is valid for an uplink service stream, or valid for a downlink service stream, or valid for both an uplink service stream and a downlink service stream, that is, the second data detection rule may further include the foregoing uplink/downlink validity indication.

In some embodiments, the SMO may define different data detection rules, and one data detection rule of or a combination of several data detection rules may be used as the second data detection rule.

In some embodiments, the SMO may reuse a PDR as the second data detection rule, that is, the group identification information of the packet in the core network and the inter-group dependency identification information of the packet in the core network and in some embodiments, the intra-group dependency identification information of the packet in the core network are added to a PDR rule. A PDR rule to which the group identification information of the packet in the core network and the inter-group dependency identification information of the packet in the core network and in some embodiments, the intra-group dependency identification information of the packet in the core network are added and how to add the group identification information of the packet in the core network and the inter-group dependency identification information of the packet in the core network and in some embodiments, the intra-group dependency identification information of the packet in the core network to a PDR rule may be flexibly set. In another embodiment, the SMO may alternatively add a second data detection rule and a second processing rule that are completely new.

In the packet transmission method in some embodiments, in an aspect, the AO may send the second request message to the NEO, and the second request message carries the external group identification information and the inter-group external dependency identification information of the packet of the target service stream and the AO ID, and in some embodiments, may further carry the intra-group external dependency identification information of the target service stream, so that the NEO does not need to designate the external group identification information and the inter-group external dependency identification information, and in some embodiments, the NEO does not need to designate the intra-group external dependency identification information, and the service server and/or the terminal may designate external group identification information and inter-group external dependency identification information of a packet of a personalized target service stream, and in some embodiments, may further designate intra-group external dependency identification information of a personalized target service stream; and in another aspect, the NEO may further send the external group identification information and the inter-group external dependency identification information of the packet of the target service stream, and in some embodiments, the intra-group external dependency identification information of the target service stream to the PCO, and the PCO then generates the second PCC rule according to the external group identification information and the inter-group external dependency identification information of the packet of the target service stream, and in some embodiments, the intra-group external dependency identification information of the target service stream, and sends the second PCC rule to the SMO, so that the SMO may generate the second QoS profile information according to the second PCC rule, and add the second data detection rule and the second processing rule to the second QoS profile information, which can optimize network transmission of a to-be-forwarded packet such as a media packet by using the second data detection rule and the second processing rule.

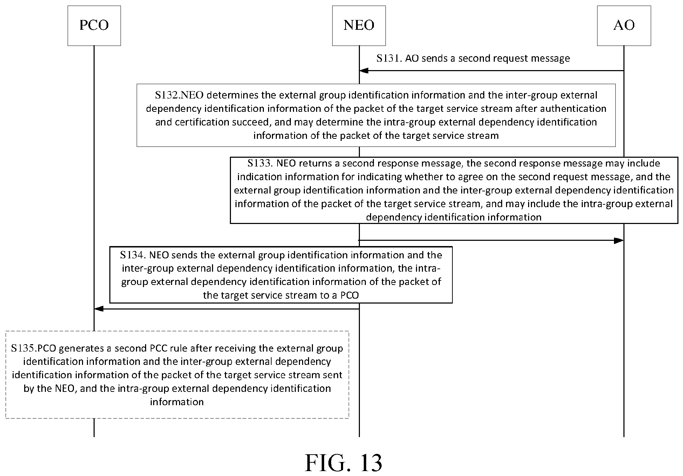

FIG. 13 is a schematic diagram of interaction of a packet transmission method according to another embodiment of the present disclosure.

As shown in FIG. 13, the method provided in some embodiments may include:
S131: An AO sends a second request message to an NEO, where the second request message does not carry external group identification information and inter-group external dependency identification information of a packet of a target service stream, and in some embodiments, does not carry intra-group external dependency identification information of the packet of the target service stream, and the second request message carries an AO ID.

In this embodiment of FIG. 13, the second request message sent by the AO to the NEO may not carry the external group identification information and the inter-group external dependency identification information of the packet of the target service stream, and in some embodiments, does not carry the intra-group external dependency identification information of the packet of the target service stream. The second request message is configured by the AO to instruct the NEO to determine the external group identification information and the inter-group external dependency identification information of the packet of the target service stream, and in some embodiments, instruct the NEO to determine the intra-group external dependency identification information of the packet of the target service stream.

In some embodiments, the second request message may further include at least one of target service stream template information, target DNN information, and/or target S-NSSAI information, which may reduce the quantity of times of interaction between the AO and the NEO.

In some embodiments, the second request message sent by the AO to the NEO may not include target service stream template information, target DNN information and/or target S-NSSAI information of the target service stream, and the like. The AO may send the AO ID, the target service stream template information, the target DNN information of the target service stream, and/or the target S-NSSAI information to the NEO through another message in advance, and the NEO may store the AO ID in association with the target service stream template information, the target DNN information and/or the target S-NSSAI information of the target service stream, and the like. In response to receiving the second request message, the NEO may search according to the AO ID carried in the second request message, to obtain the target DNN information and/or the target S-NSSAI information of the target service stream and the like, thereby reducing the amount of data carried in the second request message.

S132: The NEO receives the second request message sent by the AO, and performs authentication and certification on the second request message; and may further determine the external group identification information and the inter-group external dependency identification information of the packet of the target service stream after authentication and certification succeed, and in some embodiments, may determine the intra-group external dependency identification information of the packet of the target service stream.

S133: The NEO returns a second response message to the AO, where the second response message may include indication information for indicating whether to agree on the second request message, and the second response message may further include the external group identification information and the inter-group external dependency identification information of the packet of the target service stream, and in some embodiments, may include the intra-group external dependency identification information of the packet of the target service stream.

S134: The NEO sends the external group identification information and the inter-group external dependency identification information of the packet of the target service stream, and in some embodiments, the intra-group external dependency identification information of the packet of the target service stream to a PCO directly or indirectly.

S135: The PCO may generate a second PCC rule after receiving the external group identification information and the inter-group external dependency identification information of the packet of the target service stream sent by the NEO, and in some embodiments, receiving the intra-group external dependency identification information of the packet of the target service stream.

In the packet transmission method in some embodiments, the second request message sent by the AO does not include the external group identification information and the inter-group external dependency identification information of the packet of the target service stream, and in some embodiments, may not include the intra-group external dependency identification information, and the NEO designates the external group identification information and the inter-group external dependency identification information of the packet of the target service stream, and in some embodiments, the NEO may designate the intra-group external dependency identification information, thereby avoiding a problem that a conflict occurs between external group identification information and inter-group external dependency identification information (in some embodiments, intra-group external dependency identification information) of packets of target service streams configured by different AOs.

Although an example in which the AO exchanges information with the PCO through the NEO is used in each embodiment of FIG. 12 and FIG. 13, the present disclosure is not limited thereto. In another embodiment, the AO may alternatively directly communicate with the PCO, that is, the PCO obtains association information of a packet directly from the AO; and the NEO may alternatively store information requested by the AO in a UDR, and the PCO may receive the information from the UDR.

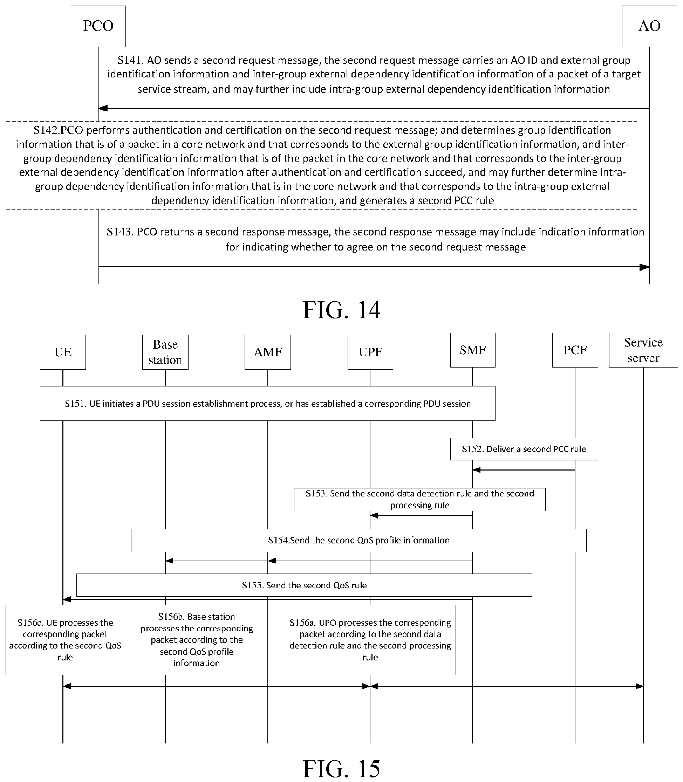

FIG. 14 is a schematic diagram of interaction of a packet transmission method according to still another embodiment of the present disclosure.

As shown in FIG. 14, the method provided in some embodiments may include:

S141: An AO sends a second request message to a PCO, where the second request message carries an AO ID and external group identification information and inter-group external dependency identification information of a packet of a target service stream, and in some embodiments, may further include intra-group external dependency identification information.

In some embodiments, the second request message may further include at least one of target service stream template information, target DNN information, and/or target S-NSSAI information, and the like, thereby reducing the quantity of times of interaction between the AO and the PCO.

In some embodiments, the second request message may not include the target service stream template information, the target DNN information, and/or the target S-NSSAI information, and the like, but instead the target service stream template information, the target DNN information, and/or the target S-NSSAI information, and the like are sent to the PCO in advance. The PCO stores the target service stream template information, the target DNN information, and/or the target S-NSSAI information, and the like in association with the AO ID, which are obtained conveniently through search after the second request message is received, thereby reducing the amount of data carried in the second request message.

S142: The PCO receives the second request message sent by the AO, and performs authentication and certification on the second request message; and determines group identification information that is of a packet in a core network and that corresponds to the external group identification information, and inter-group dependency identification information that is of the packet in the core network and that corresponds to the inter-group external dependency identification information after authentication and certification succeed, and in some embodiments, may further determine intra-group dependency identification information that is in the core network and that corresponds to the intra-group external dependency identification information, and generates a second PCC rule.

S 143 : The PCO returns a second response message to the AO, where the second response message may include indication information for indicating whether to agree on the second request message.

FIG. 15 is a schematic diagram of policy enforcement on a network side. In According to some embodiments, FIG. 15, an example in which a UE is used as a terminal and a base station is used as a network device is taken. As shown in FIG. 15, the method provided in some embodiments may include:
S151: A UE initiates a PDU session establishment process, or a UE has established a corresponding PDU session.

In some embodiments, the UE has established a PDU session (for example, target DNN or target S-NSSAI) of the target service, or the UE initiates a PDU session establishment process (for example, for target DNN or target S-NSSAI) of the target service.

S152: A PCO delivers a second PCC rule to an SMO.

In some embodiments, the second PCC rule may include external group identification information of a packet of a target service stream, group identification information that is of a packet in a core network and that corresponds to the external group identification information, inter-group external dependency identification information, and inter-group dependency identification information that is of the packet in the core network and that corresponds to the inter-group external dependency identification information, and in some embodiments, may further include intra-group external dependency identification information of the packet of the target service stream and intra-group dependency identification information that is of the packet in the core network and that corresponds to the intra-group external dependency identification information.

S153: The SMO receives the second PCC rule delivered by the PCO, generates a second data detection rule and a second processing rule according to the external group identification information of the packet of the target service stream, the group identification information that is of the packet in the core network and that corresponds to the external group identification information, the inter-group external dependency identification information, and the inter-group dependency identification information that is of the packet in the core network and that corresponds to the inter-group external dependency identification information that are carried in the second PCC rule, and in some embodiments, according to the intra-group external dependency identification information of the packet of the target service stream and the intra-group dependency identification information that is of the packet in the core network and that corresponds to the intra-group external dependency identification information that are carried in the second PCC rule, and generates second QoS profile information according to the second data detection rule and the second processing rule, where the second QoS profile information may include the second data detection rule and the second processing rule, and the second data detection rule may include the group identification information of the packet in the core network and the inter-group dependency identification information of the packet in the core network, and in some embodiments, the second data detection rule may further include the intra-group dependency identification information of the packet in the core network. The SMO may alternatively send the second data detection rule and the second processing rule to a UPO. The UPO herein may be an anchor UPO or may be an intermediate UPO.

In some embodiments, the SMO may further generate a fourth data detection rule and a fourth processing rule according to the second PCC rule. The fourth data detection rule may include the external group identification information and the inter-group external dependency identification information of the packet of the target service stream. In some embodiments, the fourth data detection rule may further include intra-group external dependency identification information of the packet of the target service stream, and the fourth processing rule may include group identification information that is of a packet in a core network and that corresponds to the external group identification information of the packet of the target service stream, and inter-group dependency identification information that is of the packet in the core network and that corresponds to the inter-group external dependency identification information. In some embodiments, the fourth processing rule may further include intra-group dependency identification information that is of the packet in the core network and that corresponds to the intra-group external dependency identification information of the packet of the target service stream.

The SMO may send the fourth data detection rule and the fourth processing rule to the anchor UPO. The fourth data detection rule is configured for instructing the anchor UPO to detect whether external group identification information and inter-group external dependency identification information of a downlink packet received by the anchor UPO from the service server satisfy the external group identification information and the inter-group external dependency identification information of the packet of the target service stream in the fourth data detection rule, and in some embodiments, may be further configured for instructing the anchor UPO to detect whether intra-group external dependency identification information of the downlink packet satisfies the intra-group external dependency identification information of the packet of the target service stream in the fourth data detection rule.

The fourth processing rule is configured for instructing the anchor UPO to, if the external group identification information and the inter-group external dependency identification information of the downlink packet satisfies the external group identification information and the inter-group external dependency identification information of the packet of the target service stream included in the fourth data detection rule, mark the downlink packet with the corresponding group identification information in the core network in the fourth processing rule and the inter-group dependency identification information of the packet in the core network during encapsulation of the downlink packet, and send the encapsulated downlink packet marked with the group identification information of the packet in the core network and the inter-group dependency identification information of the packet in the core network to the network device;
in some embodiments, if the inter-group external dependency identification information of the downlink packet satisfies the inter-group external dependency identification information of the packet of the target service stream included in the fourth data detection rule, mark the downlink packet with the corresponding inter-group dependency identification information of the packet in the core network in the fourth processing rule during encapsulation of the downlink packet, and send the encapsulated downlink packet marked with the inter-group dependency identification information of the packet in the core network to the network device;
if the external group identification information of the downlink packet does not satisfy the external group identification information in the fourth data detection rule or the inter-group external dependency identification information of the downlink packet does not satisfy the inter-group external dependency identification information of the packet of the target service stream included in the fourth data detection rule (the inter-group external dependency identification information does not exist in the downlink packet, or the inter-group external dependency identification information exists, but is different from the inter-group external dependency identification information in the fourth data detection rule), not mark the downlink packet with the corresponding group identification information and inter-group dependency identification information of the packet in the core network in the fourth processing rule during encapsulation of the downlink packet, but directly transmit the encapsulated downlink packet not marked with the group identification information and the inter-group dependency identification information of the packet in the core network to the network device; or
in some embodiments, if the inter-group external dependency identification information of the downlink packet does not satisfy the inter-group external dependency identification information of the packet of the target service stream included in the fourth data detection rule, not mark the downlink packet with the corresponding inter-group dependency identification information of the packet in the core network in the fourth processing rule during encapsulation of the downlink packet.

S154: The SMO may further generate second QoS profile information according to the second PCC rule, and send the second QoS profile information to an AMO, where the second QoS profile information may include the second data detection rule and the second processing rule.

In some embodiments, the SMO sends the second QoS profile information or updated second QoS profile information to the AMO, and the second QoS profile information includes the second data detection rule and the second processing rule.

The AMO receives the second QoS profile information sent by the SMO, and sends the second QoS profile information to the base station.

The base station receives the second QoS profile information sent by the AMO.

In some embodiments, the base station is a point prone to congestion, and therefore the second QoS profile information may be configured in the base station, to detect and process an uplink packet sent by the UE and a downlink packet sent by the service server separately.

S155: The SMO may further generate a second QoS rule according to the second PCC rule, where the second QoS rule may include external group identification information of a packet of a target service stream, group identification information that is of a packet in a core network and that corresponds to the external group identification information, inter-group external dependency identification information, and inter-group dependency identification information that is of the packet in the core network and that corresponds to the inter-group external dependency identification information, and in some embodiments, may further include intra-group external dependency identification information and intra-group dependency identification information that is of the packet in the core network and that corresponds to the intra-group external dependency identification information; and send the second QoS rule to the UE.

S156a: The UPO processes the corresponding packet according to the second data detection rule and the second processing rule.

The intermediate UPO and/or the anchor UPO processes the target service stream according to the second data detection rule and the second processing rule. For a processing process, reference may be made to the foregoing process in which the network device processes the to-be-forwarded packet by using the second QoS profile information.

In some embodiments, the UPO is a point prone to congestion, and therefore the second data detection rule and the second processing rule may be configured in the UPO, to detect and process an uplink packet sent by the UE or a downlink packet sent by the service server.

The anchor UPO may further receive the fourth data detection rule and the fourth processing rule, and determine whether external group identification information and inter-group external dependency identification information of a downlink packet received from a service server satisfy the external group identification information and the inter-group external dependency identification information of the packet of the target service stream in the fourth data detection rule.

When detecting that the external group identification information and the inter-group external dependency identification information of the downlink packet received by the anchor UPO satisfies the external group identification information and the inter-group external dependency identification information of the packet of the target service stream included in the fourth data detection rule, the anchor UPO may mark the downlink packet with the corresponding group identification information of the packet in the core network in the fourth processing rule and the inter-group dependency identification information of the packet in the core network, and send the encapsulated downlink packet marked with the group identification information of the packet in the core network and the inter-group dependency identification information of the packet in the core network to the network device; or when detecting that the external group identification information or the inter-group external dependency identification information of the downlink packet received by the anchor UPO does not satisfy the external dependency identification information of the packet of the target service stream included in the fourth data detection rule, the anchor UPO may not mark the downlink packet with the corresponding group identification information of the packet in the core network in the fourth processing rule and the inter-group dependency identification information of the packet in the core network during encapsulation of the downlink packet, but directly transmit the encapsulated downlink packet not marked with the group identification information of the packet in the core network and the inter-group dependency identification information of the packet in the core network to the network device;

In some embodiments, if it is detected that the inter-group external dependency identification information of the downlink packet satisfies the inter-group external dependency identification information of the packet of the target service stream included in the fourth data detection rule, the anchor UPO marks the downlink packet with the corresponding inter-group dependency identification information of the packet in the core network in the fourth processing rule, and sends the encapsulated downlink packet marked with the inter-group dependency identification information of the packet in the core network to the network device.

If it is detected that the external group identification information of the downlink packet does not satisfy the external group identification information in the fourth data detection rule or the inter-group external dependency identification information of the downlink packet does not satisfy the inter-group external dependency identification information of the packet of the target service stream included in the fourth data detection rule (the inter-group external dependency identification information does not exist in the downlink packet, or the inter-group external dependency identification information exists, but is different from the inter-group external dependency identification information in the fourth data detection rule), the anchor UPO does not mark the downlink packet with the corresponding group identification information and inter-group dependency identification information of the packet in the core network in the fourth processing rule, but transmit the encapsulated downlink packet not marked with the group identification information and the inter-group dependency identification information of the packet in the core network to the network device.

In some embodiments, if it is detected that the inter-group external dependency identification information of the downlink packet does not satisfy the inter-group external dependency identification information of the packet of the target service stream included in the fourth data detection rule, the anchor UPO does not mark the downlink packet with the corresponding inter-group dependency identification information of the packet in the core network in the fourth processing rule, but transmits the encapsulated downlink packet not marked with the inter-group dependency identification information of the packet in the core network to the network device.

S156b: The base station processes the corresponding packet according to the second QoS profile information.

For a processing process, reference may be made to the description of the foregoing embodiments.

S 156c: The UE processes the corresponding packet according to the second QoS rule.

When detecting that the external group identification information and the inter-group external dependency identification information of the uplink packet to be sent by the UE satisfies the external group identification information and the inter-group external dependency identification information of the packet of the target service stream included in the second QoS rule, the UE may separately mark the uplink packet with the corresponding group identification information and inter-group dependency identification information of the packet in the core network in the second QoS rule, and send the uplink packet marked with the group identification information and the inter-group dependency identification information of the packet in the core network to the network device; or when detecting that the external group identification information or the inter-group external dependency identification information of the uplink packet does not satisfy the external dependency identification information of the packet of the target service stream included in the second QoS rule, the UE does not mark the uplink packet with the corresponding group identification information and inter-group dependency identification information of the packet in the core network in the second QoS rule, but directly transmits the uplink packet to the network device.

In some embodiments, if it is detected that the inter-group external dependency identification information of the uplink packet satisfies the inter-group external dependency identification information of the packet of the target service stream included in the second QoS rule, the UE marks the uplink packet with the corresponding inter-group dependency identification information of the packet in the core network in the second QoS rule, and sends the uplink packet marked with the inter-group dependency identification information of the packet in the core network to the network device.

If it is detected that the external group identification information of the uplink packet does not satisfy the external group identification information in the second QoS rule or the inter-group external dependency identification information of the uplink packet does not satisfy the inter-group external dependency identification information of the packet of the target service stream included in the second QoS rule (the inter-group external dependency identification information does not exist in the uplink packet, or the inter-group external dependency identification information exists, but is different from the inter-group external dependency identification information in the second QoS rule), the UE does not mark the inter-group external dependency identification information in the uplink packet with the corresponding inter-group dependency identification information of the packet in the core network in the second QoS rule, but directly transmits the uplink packet to the network device.

In some embodiments, if it is detected that the inter-group external dependency identification information of the uplink packet does not satisfy the inter-group external dependency identification information of the packet of the target service stream included in the second QoS rule, the UE does not mark the uplink packet with the corresponding inter-group dependency identification information of the packet in the core network in the second QoS rule.

An execution sequence of S153, S154, and S155 in the embodiment of FIG. 15 is not limited and may alternatively be executed in parallel. An execution sequence of S156a, S156b, and S156c is not limited and may alternatively be executed in parallel.

In the packet transmission method in some embodiments, network transmission of a packet such as a media packet is optimized, and when different packets have a close dependence relationship, if a packet that is depended on is lost for a reason such as congestion, decoding of an image or a video corresponding to another packet in dependence on the packet cannot be completed on the client side or service server side. Therefore, the network may perform corresponding transmission optimization, to ensure service experience of a target service such as a multimedia service as much as possible while lessening data transmission load on the network.

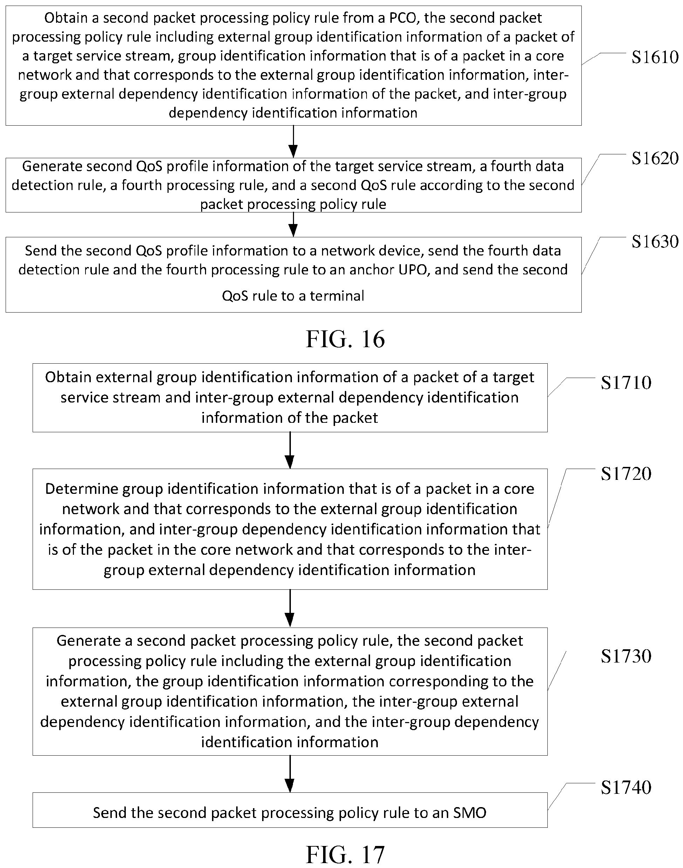

FIG. 16 is a flowchart of a packet transmission method according to another embodiment of the present disclosure. The method as illustrated in FIG. 16 may be performed by an SMO.

As shown in FIG. 16, the method provided in some embodiments may include:
S1610: Obtain a second packet processing policy rule from a PCO, the second packet processing policy rule including external group identification information of a packet of a target service stream, group identification information that is of a packet in a core network and that corresponds to the external group identification information, inter-group external dependency identification information of the packet, and inter-group dependency identification information that is of the packet in the core network and that corresponds to the inter-group external dependency identification information.

S1620: Generate second QoS profile information of the target service stream, a fourth data detection rule, a fourth processing rule, and a second QoS rule according to the second packet processing policy rule, where the second QoS profile information may include a second data detection rule and a second processing rule, the second data detection rule may include the group identification information and the inter-group dependency identification information, the fourth data detection rule may include the external group identification information and the inter-group external dependency identification information, the fourth processing rule may include the group identification information and the inter-group dependency identification information, and the second QoS rule may include the external group identification information, the group identification information corresponding to the external group identification information, the inter-group external dependency identification information, and the inter-group dependency identification information corresponding to the inter-group external dependency identification information.

S 1630: Send the second QoS profile information to a network device, send the fourth data detection rule and the fourth processing rule to an anchor UPO, and send the second QoS rule to a terminal.

In some embodiments, the second packet processing policy rule may further include intra-group external dependency identification information of the packet of the target service stream and intra-group dependency identification information that is of the packet in the core network and that corresponds to the intra-group external dependency identification information.

The second data detection rule may further include the intra-group dependency identification information.

The fourth data detection rule may further include the intra-group external dependency identification information, and the fourth processing rule may further include the intra-group dependency identification information.

For other content of this embodiment of FIG. 16, reference may be made to the foregoing other embodiments.

FIG. 17 is a flowchart of a packet transmission method according to still another embodiment of the present disclosure. The method as illustrated in FIG. 17 may be performed by a PCO.

As shown in FIG. 17, the method provided in some embodiments may include:
S 1710: Obtain external group identification information of a packet of a target service stream and inter-group external dependency identification information of the packet.

S 1720: Determine group identification information that is of a packet in a core network and that corresponds to the external group identification information, and inter-group dependency identification information that is of the packet in the core network and that corresponds to the inter-group external dependency identification information.

S 1730: Generate a second packet processing policy rule, the second packet processing policy rule including the external group identification information, the group identification information corresponding to the external group identification information, the inter-group external dependency identification information, and the inter-group dependency identification information corresponding to the inter-group external dependency identification information.

S1740: Send the second packet processing policy rule to an SMO.

For other content of this embodiment of FIG. 17, reference may be made to the foregoing other embodiments.

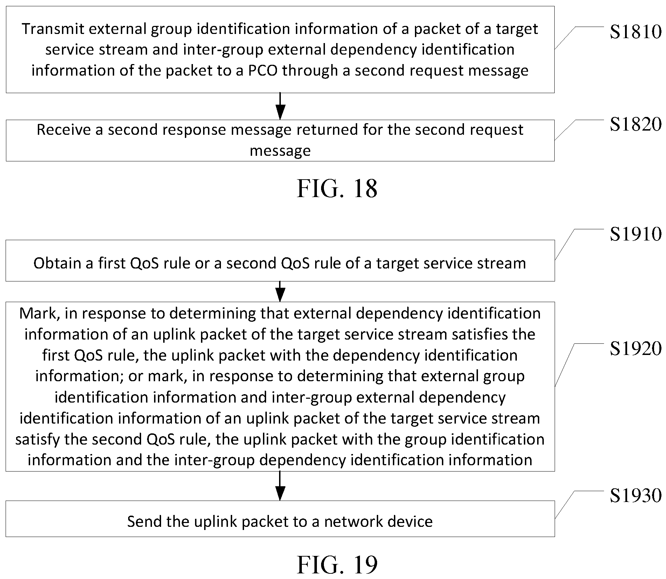

FIG. 18 is a flowchart of a packet transmission method according to still another embodiment of the present disclosure. The method as illustrated in FIG. 18 may be performed by an AO.

As shown in FIG. 18, the method provided in some embodiments may include:
S1810: Transmit external group identification information of a packet of a target service stream and inter-group external dependency identification information of the packet to a PCO through a second request message.

S1820: Receive a second response message returned for the second request message.

The second request message may be configured for instructing the PCO to determine group identification information that is of a packet in a core network and that corresponds to the external group identification information and inter-group dependency identification information that is of the packet in the core network and that corresponds to the inter-group external dependency identification information, and generate a second packet processing policy rule, and the second packet processing policy rule may include the external group identification information, the group identification information corresponding to the external group identification information, the inter-group external dependency identification information, and the inter-group dependency identification information corresponding to the inter-group external dependency identification information.

For other content of this embodiment of FIG. 18, reference may be made to the foregoing other embodiments.

Further, an embodiment of the present disclosure further provides a packet transmission method. The method may be performed by a UPO (which may be an anchor UPO or an intermediate UPO), and the method may include: obtaining a second data detection rule and a second processing rule of a target service stream from an SMO, where the second data detection rule may include group identification information of a packet in a core network of the target service stream and inter-group dependency identification information in the core network; receiving a to-be-forwarded packet; and processing the to-be-forwarded packet according to the second data detection rule and the second processing rule.

FIG. 19 is a flowchart of a packet transmission method according to still another embodiment of the present disclosure. The method as illustrated in FIG. 19 may be performed by a terminal.

As shown in FIG. 19, the method provided in some embodiments may include:
S1910: Obtain a first QoS rule or a second QoS rule of a target service stream, where the first QoS rule may include external dependency identification information of a packet of the target service stream and dependency identification information that is of a packet in a core network and that corresponds to the external dependency identification information; and the second QoS rule may include external group identification information of the packet of the target service stream, group identification information that is of a packet in a core network and that corresponds to the external group identification information, inter-group external dependency identification information of the packet of the target service stream, and inter-group dependency identification information that is of the packet in the core network and that corresponds to the inter-group external dependency identification information.

S 1920: Mark, in response to determining that external dependency identification information of an uplink packet of the target service stream satisfies the first QoS rule, the uplink packet with the dependency identification information; or mark, in response to determining that external group identification information and inter-group external dependency identification information of an uplink packet of the target service stream satisfy the second QoS rule, the uplink packet with the group identification information and the inter-group dependency identification information.

S 1930: Send the uplink packet to a network device.

For other content of this embodiment of FIG. 19, reference may be made to the foregoing other embodiments.

In some embodiments, network transmission for a packet such as a media packet is optimized. When a group of packets have a close dependence relationship, if a packet in the group is lost for a reason such as congestion, the network may consider to determine, according to characteristics of the packets, a packet which is lost, thereby reducing the impact on decoding on the client or server side, which can ensure service experience of a target service such as a multimedia service as much as possible.

Further, an embodiment of the present disclosure further provides a packet transmission method. The method may be performed by an anchor UPO, and the method may include: obtaining a third data detection rule and a third processing rule of a target service stream, where the third data detection rule may include external dependency identification information of a packet of the target service stream, and the third processing rule may include dependency identification information that is of a packet in a core network and that corresponds to the external dependency identification information; marking, in response to determining that external dependency identification information of a downlink packet of the target service stream satisfies the third data detection rule, the downlink packet with the dependency identification information in the third processing rule; and sending the downlink packet that is encapsulated and that is marked with the dependency identification information to a network device.

An embodiment of the present disclosure provides a packet transmission method, The method may be performed by an anchor UPO, and the method may include: obtaining a fourth data detection rule and a fourth processing rule of a target service stream, where the fourth data detection rule may include external group identification information of a packet of the target service stream and inter-group external dependency identification information of the packet of the target service stream, and the fourth processing rule may include group identification information that is of a packet in a core network and that corresponds to the external group identification information, and inter-group dependency identification information that is of the packet in the core network and that corresponds to the inter-group external dependency identification information; marking, in response to determining that external group identification information and inter-group external dependency identification information of a downlink packet of the target service stream satisfy the fourth data detection rule, the downlink packet with the corresponding group identification information and the corresponding inter-group dependency identification information corresponding in the fourth processing rule; and sending the downlink packet that is encapsulated and that is marked with the group identification information and the inter-group dependency identification information to a network device.

Further, an embodiment of the present disclosure further provides a packet transmission method. The packet transmission method may be performed by an AO, and the method may include: transmitting an updated frame rate parameter of a target service stream to a PCO, the updated frame rate parameter being configured for instructing the PCO to generate a network configuration policy rule and send the network policy configuration policy rule to an SMO, and the network configuration policy rule including the updated frame rate parameter; the network configuration policy rule being configured for instructing the SMO to send the updated frame rate parameter to a network device; and the updated frame rate parameter being configured for instructing the network device to update network parameter configuration information of the network device and a terminal according to the updated frame rate parameter.

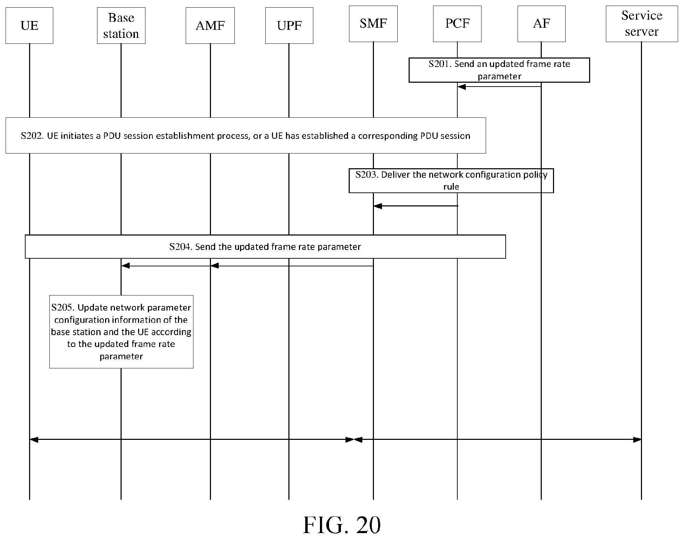

As shown in FIG. 20, the method may include the following operations.

S201: An AO may send an updated frame rate parameter to a PCO.

S202: A UE initiates a PDU session establishment process, or a UE has established a corresponding PDU session.

S203: The PCO receives the updated frame rate parameter sent by the AO; and may generate a network configuration policy rule according to the updated frame rate parameter, and deliver the network configuration policy rule to an SMO.

S204: After receiving the network configuration policy rule delivered by the PCO, the SMO may send the updated frame rate parameter carried in the network configuration policy rule to a base station through an AMO.

S205: After receiving the updated frame rate parameter, the base station may update network parameter configuration information of the base station and the UE according to the updated frame rate parameter.

In some embodiments, given that periodicity of a service may affect the parameter configuration of the base station and this periodicity may be changing, the AO may send the updated frame rate parameter to the network when the periodicity of the service, for example, a frame rate is changing, to cause the network to adjust corresponding network parameter configuration information.

An embodiment of the present disclosure provides a network device, which may include a receiving unit and a processing unit.

The receiving unit may be configured to obtain first QoS profile information of a target service stream from an SMO, where the first QoS profile information may include a first data detection rule and a first processing rule, and the first data detection rule may include dependency identification information of a packet in a core network.

The receiving unit may be further configured to receive a to-be-forwarded packet.

The processing unit may be configured to process the to-be-forwarded packet according to the first data detection rule and the first processing rule in the first QoS profile information.

In some embodiments, the processing unit may be further configured to: in response to congestion occurring in a network, transmit the to-be-forwarded packet according to the first processing rule in response to determining that dependency identification information of the to-be-forwarded packet satisfies the first data detection rule; or discard the to-be-forwarded packet according to the first processing rule if dependency identification information of the to-be-forwarded packet does not satisfy the first data detection rule.

In some embodiments, the first data detection rule may further include dependency data group internal indication information.

For other content of this embodiment of the present disclosure, reference may be made to the foregoing other embodiments.

Further, An embodiment of the present disclosure further provides a UPO, which may include: a receiving unit, which may be configured to obtain a first data detection rule and a first processing rule of a target service stream from an SMO, where the first data detection rule may include dependency identification information of a packet in a core network; the receiving unit may be further configured to receive a to-be-forwarded packet; and a processing unit, which may be configured to process the to-be-forwarded packet according to the first data detection rule and the first processing rule.

An embodiment of the present disclosure provides a network device, which may include a receiving unit and a processing unit.

The receiving unit may be configured to obtain second QoS profile information of a target service stream from an SMO, where the second QoS profile information may include a second data detection rule and a second processing rule, and the second data detection rule may include group identification information of a packet in a core network of the target service stream and inter-group dependency identification information in the core network.

The receiving unit may be further configured to receive a to-be-forwarded packet.

The processing unit may be configured to process the to-be-forwarded packet according to the second data detection rule and the second processing rule in the second QoS profile information.

In some embodiments, the processing unit may be further configured to: in response to congestion occurring in a network, transmit the to-be-forwarded packet according to the second processing rule in response to determining that group identification information and inter-group dependency identification information of the to-be-forwarded packet satisfy the second data detection rule; or discard the to-be-forwarded packet according to the second processing rule in response to determining that group identification information of the to-be-forwarded packet satisfies the second data detection rule and inter-group dependency identification information of the to-be-forwarded packet does not satisfy the second data detection rule.

In some embodiments, the second data detection rule may further include intra-group dependency identification information in the core network. The processing unit may be further configured to transmit the to-be-forwarded packet according to the second processing rule in response to determining that the group identification information, the inter-group dependency identification information, and intra-group dependency identification information of the to-be-forwarded packet satisfy the second data detection rule.

For other content of this embodiment of the present disclosure, reference may be made to the foregoing other embodiments.

Further, An embodiment of the present disclosure further provides a UPO, which may include: a receiving unit, which may be configured to obtain a second data detection rule and a second processing rule of a target service stream from an SMO, where the second data detection rule may include group identification information of a packet in a core network of the target service stream and inter-group dependency identification information in the core network; the receiving unit may be further configured to receive a to-be-forwarded packet; and a processing unit, which may be configured to process the to-be-forwarded packet according to the second data detection rule and the second processing rule.

An embodiment of the present disclosure provides an SMO, which may include a receiving unit, a processing unit, and a sending unit.

The receiving unit may be configured to obtain a first packet processing policy rule from a PCO, where the first packet processing policy rule may include external dependency identification information of a packet of a target service stream and dependency identification information that is of a packet in a core network and that corresponds to the external dependency identification information.

The processing unit may be configured to generate first QoS profile information of the target service stream, a third data detection rule, a third processing rule, and a first QoS rule according to the first packet processing policy rule, where the first QoS profile information may include a first data detection rule and a first processing rule, the first data detection rule may include the dependency identification information, the third data detection rule may include the external dependency identification information, the third processing rule may include the dependency identification information, and the first QoS rule may include the external dependency identification information and the dependency identification information corresponding to the external dependency identification information.

The sending unit may be configured to send the first QoS profile information to a network device, send the third data detection rule and the third processing rule to an anchor UPO, and send the first QoS rule to a terminal.

For other content of this embodiment of the present disclosure, reference may be made to the foregoing other embodiments.

An embodiment of the present disclosure provides an SMO, which may include a receiving unit, a processing unit, and a sending unit.

The receiving unit may be configured to obtain a second packet processing policy rule from a PCO, the second packet processing policy rule including external group identification information of a packet of a target service stream, group identification information that is of a packet in a core network and that corresponds to the external group identification information, inter-group external dependency identification information of the packet, and inter-group dependency identification information that is of the packet in the core network and that corresponds to the inter-group external dependency identification information.

The processing unit may be configured to generate second QoS profile information of the target service stream, a fourth data detection rule, a fourth processing rule, and a second QoS rule according to the second packet processing policy rule, where the second QoS profile information may include a second data detection rule and a second processing rule, the second data detection rule may include the group identification information and the inter-group dependency identification information, the fourth data detection rule includes the external group identification information and the inter-group external dependency identification information, the fourth processing rule may include the group identification information and the inter-group dependency identification information, and the second QoS rule may include the external group identification information, the group identification information corresponding to the external group identification information, the inter-group external dependency identification information, and the inter-group dependency identification information corresponding to the inter-group external dependency identification information.

The sending unit may be configured to send the second QoS profile information to a network device, send the fourth data detection rule and the fourth processing rule to an anchor UPO, and send the second QoS rule to a terminal.

For other content of this embodiment of the present disclosure, reference may be made to the foregoing other embodiments.

An embodiment of the present disclosure provides a PCO, which may include: a receiving unit, which may be configured to obtain external dependency identification information of a packet of a target service stream; a processing unit, which may be configured to determine dependency identification information that is of a packet in a core network and that corresponds to the external dependency identification information; the processing unit may be further configured to generate a first packet processing policy rule according to the dependency identification information, where the first packet processing policy rule may include the external dependency identification information and the dependency identification information corresponding to the external dependency identification information; and a sending unit, which may be configured to send the first packet processing policy rule to an SMO.

For other content of this embodiment of the present disclosure, reference may be made to the foregoing other embodiments.

An embodiment of the present disclosure provides a PCO, which may include: a receiving unit, which may be configured to obtain external group identification information of a packet of a target service stream and inter-group external dependency identification information of the packet; a processing unit, which may be configured to determine group identification information that is of a packet in a core network and that corresponds to the external group identification information, and inter-group dependency identification information that is of the packet in the core network and that corresponds to the inter-group external dependency identification information; the processing unit may be further configured to generate a second packet processing policy rule, the second packet processing policy rule including the external group identification information, the group identification information corresponding to the external group identification information, the inter-group external dependency identification information, and the inter-group dependency identification information corresponding to the inter-group external dependency identification information; and a sending unit, which may be configured to send the second packet processing policy rule to an SMO.

For other content of this embodiment of the present disclosure, reference may be made to the foregoing other embodiments.

An embodiment of the present disclosure provides an AO, which may include: a sending unit, which may be configured to transmit external dependency identification information of a packet of a target service stream to a PCO through a first request message; and a receiving unit, which may be configured to receive a first response message returned for the first request message, where the first request message may be configured for instructing the PCO to determine dependency identification information of a packet in a core network corresponding to the external dependency identification information according to the external dependency identification information, and generate a first packet processing policy rule, and the first packet processing policy rule may include the external dependency identification information and the dependency identification information.

For other content of this embodiment of the present disclosure, reference may be made to the foregoing other embodiments.

An embodiment of the present disclosure provides an AO, including: a sending unit, which may be configured to transmit external group identification information of a packet of a target service stream and inter-group external dependency identification information of the packet to a PCO through a second request message; and a receiving unit, which may be configured to receive a second response message returned for the second request message, where the second request message may be configured for instructing the PCO to determine group identification information that is of a packet in a core network and that corresponds to the external group identification information and inter-group dependency identification information that is of the packet in the core network and that corresponds to the inter-group external dependency identification information, and generate a second packet processing policy rule, and the second packet processing policy rule may include the external group identification information, the group identification information corresponding to the external group identification information, the inter-group external dependency identification information, and the inter-group dependency identification information corresponding to the inter-group external dependency identification information.

For other content of this embodiment of the present disclosure, reference may be made to the foregoing other embodiments.

An embodiment of the present disclosure provides a terminal, which may include: a receiving unit, which may be configured to obtain a first QoS rule or a second QoS rule of a target service stream, where the first QoS rule may include external dependency identification information of a packet of the target service stream and dependency identification information that is of a packet in a core network and that corresponds to the external dependency identification information; and the second QoS rule may include external group identification information of the packet of the target service stream, group identification information that is of a packet in a core network and that corresponds to the external group identification information, inter-group external dependency identification information of the packet of the target service stream, and inter-group dependency identification information that is of the packet in the core network and that corresponds to the inter-group external dependency identification information; and a processing unit, which may be configured to: mark, in response to determining that external dependency identification information of an uplink packet of the target service stream satisfies the first QoS rule, the uplink packet with the dependency identification information; or mark, in response to determining that external group identification information and inter-group external dependency identification information of an uplink packet of the target service stream satisfy the second QoS rule, the uplink packet with the group identification information and the inter-group dependency identification information; and a sending unit, configured to send the uplink packet to a network device.

For other content of this embodiment of the present disclosure, reference may be made to the foregoing other embodiments.

Further, An embodiment of the present disclosure provides an anchor UPO, which may include: a receiving unit, which may be configured to obtain a third data detection rule and a third processing rule of a target service stream, where the third data detection rule may include external dependency identification information of a packet of the target service stream, and the third processing rule may include dependency identification information that is of a packet in a core network and that corresponds to the external dependency identification information; a processing unit, which may be configured to mark, in response to determining that external dependency identification information of a downlink packet of the target service stream satisfies the third data detection rule, the downlink packet with the dependency identification information in the third processing rule; and a sending unit, which may be configured to send the downlink packet that is encapsulated and that is marked with the dependency identification information to a network device.

An embodiment of the present disclosure provides an anchor UPO, which may include: a receiving unit, which may be configured to obtain a fourth data detection rule and a fourth processing rule of a target service stream, where the fourth data detection rule may include external group identification information of a packet of the target service stream and inter-group external dependency identification information of the packet of the target service stream, and the fourth processing rule may include group identification information that is of a packet in a core network and that corresponds to the external group identification information, and inter-group dependency identification information that is of the packet in the core network and that corresponds to the inter-group external dependency identification information; a processing unit, which may be configured to mark, in response to determining that external group identification information and inter-group external dependency identification information of a downlink packet of the target service stream satisfy the fourth data detection rule, the downlink packet with the corresponding group identification information and the corresponding inter-group dependency identification information corresponding in the fourth processing rule; and a sending unit, which may be configured to send the downlink packet that is encapsulated and that is marked with the group identification information and the inter-group dependency identification information to a network device.

An embodiment of the present disclosure provides an AO, which may include: a sending unit, which may be configured to transmit an updated frame rate parameter of a target service stream to a PCO, where the updated frame rate parameter may be configured for instructing the PCO to generate a network configuration policy rule and send the network policy configuration policy rule to an SMO, and the network configuration policy rule may include the updated frame rate parameter; the network configuration policy rule may be configured for instructing the SMO to send the updated frame rate parameter to a network device; and the updated frame rate parameter may be configured for instructing the network device to update network parameter configuration information of the network device and a terminal according to the updated frame rate parameter.

For other content of this embodiment of the present disclosure, reference may be made to the foregoing other embodiments.

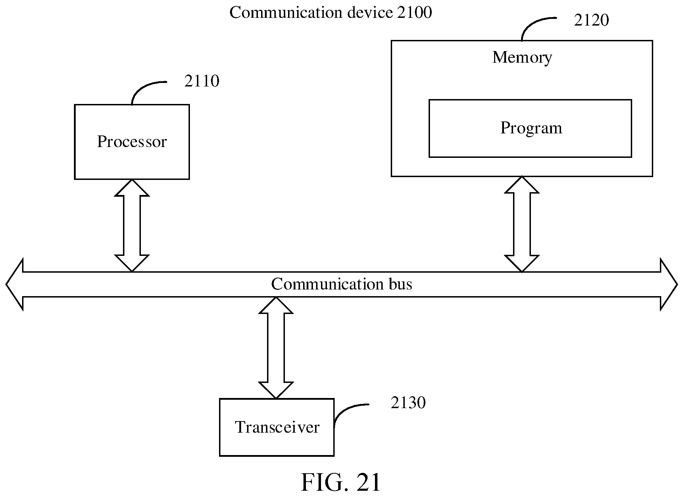

FIG. 21 is a schematic structural diagram of a communication device 2100 according to some embodiments of the present disclosure. The communication device may be a terminal, for example, a UE, or may be a network device, for example, a base station, or may be a PCO and/or an NEO and/or an AO and/or an AMO and/or an SMO and/or a UPO. The communication device 2100 shown in FIG. 21 includes a processor 2110. The processor 2110 may invoke a computer program from a memory and run the computer program, to implement the method in some embodiments.

In some embodiments, as shown in FIG. 21, the communication device 2100 may further include a memory 2120. The processor 2110 may invoke the computer program from the memory 2120 and run the computer program, to implement the method in some embodiments.

The memory 2120 may be a component independent of the processor 2110, or may be integrated into the processor 2110.

In some embodiments, as shown in FIG. 21, the communication device 2100 may further include a transceiver 2130, and the processor 2110 may control the transceiver 2130 to communicate with another device and ally may send information or data to another device or receive information or data sent by another device.

The transceiver 2130 may include a transmitter and a receiver. The transceiver 2130 may further include an antenna, and a quantity of the antenna may be one or more.

In some embodiments, the communication device 2100 may be various network elements in some embodiments, and the communication device 2100 can implement corresponding procedures implemented by the network elements in various methods in some embodiments. For brevity, details are not described herein again.

In some embodiments, the communication device 2100 may be a network device in some embodiments, and the communication device 2100 can implement corresponding procedures implemented by the network device in various methods in some embodiments. For brevity, details are not described herein again.

In some embodiments, the communication device 2100 may be a mobile terminal/a terminal in some embodiments, and the communication device 2100 can implement corresponding procedures implemented by the mobile terminal/the terminal in various methods in some embodiments. For brevity, details are not described herein again.

The processor in some embodiments may be an integrated circuit chip having a signal processing capability. In an implementation process, operations in the foregoing method embodiments may be implemented by using a hardware integrated logical circuit in the processor, or by using instructions in a form of software.

The foregoing processor may implement or perform the methods, the operations, and logical block diagrams that are disclosed in some embodiments. Operations of the method disclosed with reference to the embodiment of the present disclosure may be directly implemented by a hardware decoding processor, or implemented by a combination of hardware in the decoding processor and a software module. The software module may be located in a mature storage medium in the art, such as a random access memory, a flash memory, a read-only memory, a programmable read-only memory, an electrically-erasable programmable memory, or a register. The storage medium is located in the memory. The processor reads information in the memory and completes the operations of the methods in combination with hardware thereof.

An embodiment of the present disclosure further provides a computer-readable storage medium, configured to store a computer program.

In some embodiments, the computer-readable storage medium may be applied to the network device in some embodiments, and the computer program enables a computer to perform corresponding procedures implemented by the network device in the methods in some embodiments. For brevity, details are not described herein again.

In some embodiments, the computer-readable storage medium may be applied to the network elements in some embodiments, and the computer storage medium causes the computer to perform corresponding procedures implemented by the network elements in various methods in some embodiments. For brevity, details are not described herein again.

In some embodiments, the computer-readable storage medium may be applied to the network device in the mobile terminal/the terminal in some embodiments, and the computer program enables a computer to perform corresponding procedures implemented by the mobile terminal/the terminal in the methods in some embodiments. For brevity, details are not described herein again.

An embodiment of the present disclosure further provides a computer program product, including a computer program instruction.

In some embodiments, the computer program product may be applied to the network device in some embodiments, and the computer program instruction enables a computer to perform corresponding procedures implemented by the network device in the methods in some embodiments. For brevity, details are not described herein again.

In some embodiments, the computer program product may be applied to the network elements in some embodiments, and the computer program instruction causes the computer to perform corresponding procedures implemented by the network elements in various methods in some embodiments. For brevity, details are not described herein again.

In some embodiments, the computer program product may be applied to the mobile terminal/the terminal in some embodiments, and the computer program instruction enables a computer to perform corresponding procedures implemented by the mobile terminal/the terminal in the methods in some embodiments. For brevity, details are not described herein again.

An embodiment of the present disclosure further provides a computer program.

In some embodiments, the computer program may be applied to the network device in some embodiments, and when the computer program is run on the computer, the computer is enabled to perform corresponding procedures implemented by the network device in the methods in some embodiments. For brevity, details are not described herein again.

In some embodiments, the computer program may be applied to the network elements in some embodiments, and when the computer program is run on the computer, the computer is enabled to perform corresponding procedures implemented by the network elements in the methods in some embodiments. For brevity, details are not described herein again.

In some embodiments, the computer program may be applied to the network device in the mobile terminal/the terminal in some embodiments, and when the computer program is run on the computer, the computer is enabled to perform corresponding procedures implemented by the mobile terminal/the terminal in the methods in some embodiments. For brevity, details are not described herein again.

## Claims

1. A packet transmission method, executable by a base station, and the method comprising:
obtaining first quality of service, QoS, profile information of a target service stream from a session management object, SMO, the first QoS profile information comprising a first data detection rule and a first processing rule, and the first data detection rule comprising dependency identification information of a packet in a core network;
receiving a to-be-forwarded packet; and
processing the to-be-forwarded packet according to the first data detection rule and the first processing rule in the first QoS profile information.

2. The method according to claim 1, wherein the processing the to-be-forwarded packet according to the first data detection rule and the first processing rule in the first QoS profile information comprises:
in response to congestion occurring in a network,
transmitting the to-be-forwarded packet according to the first processing rule in response to determining that dependency identification information of the to-be-forwarded packet satisfies the first data detection rule; or
discarding the to-be-forwarded packet according to the first processing rule if dependency identification information of the to-be-forwarded packet does not satisfy the first data detection rule.

3. The method according to claim 1 or 2, wherein the dependency identification information comprises identification information that is determined by a policy control object, PCO, and that indicates whether interdependency exists between different packets.

4. A packet transmission method, executable by a base station, and the method comprising:
obtaining second quality of service, QoS, profile information of a target service stream from a session management object, SMO, the second QoS profile information comprising a second data detection rule and a second processing rule, and the second data detection rule comprising group identification information of a packet in a core network of the target service stream and inter-group dependency identification information in the core network;
receiving a to-be-forwarded packet; and
processing the to-be-forwarded packet according to the second data detection rule and the second processing rule in the second QoS profile information.

5. The method according to claim 4, wherein the processing the to-be-forwarded packet according to the second data detection rule and the second processing rule in the second QoS profile information comprises:
in response to congestion occurring in a network,
transmitting the to-be-forwarded packet according to the second processing rule in response to determining that group identification information and inter-group dependency identification information of the to-be-forwarded packet satisfy the second data detection rule; or
discarding the to-be-forwarded packet according to the second processing rule in response to determining that group identification information of the to-be-forwarded packet satisfies the second data detection rule and inter-group dependency identification information of the to-be-forwarded packet does not satisfy the second data detection rule.

6. The method according to claim 5, wherein the second data detection rule further comprises intra-group dependency identification information in the core network; and
the transmitting the to-be-forwarded packet according to the second processing rule in response to determining that group identification information and inter-group dependency identification information of the to-be-forwarded packet satisfy the second data detection rule comprises:
transmitting the to-be-forwarded packet according to the second processing rule in response to determining that the group identification information, the inter-group dependency identification information, and intra-group dependency identification information of the to-be-forwarded packet satisfy the second data detection rule.

7. The method according to any one of claims 4 to 6, wherein the second data detection rule further comprises dependency data group internal indication information; and
the dependency data group internal indication information is configured for indicating that packets in a group corresponding to the group identification information are grouped according to a dependence relationship between the packets.

8. A packet transmission method, executable by a network device corresponding to a session management object, SMO, and the method comprising:
obtaining a first packet processing policy rule from a policy control object, PCO, the first packet processing policy rule comprising external dependency identification information of a packet of a target service stream and dependency identification information that is of a packet in a core network and that corresponds to the external dependency identification information;
generating first quality of service, QoS, profile information of the target service stream, a third data detection rule, a third processing rule, and a first QoS rule according to the first packet processing policy rule, the first QoS profile information comprising a first data detection rule and a first processing rule, the first data detection rule comprising the dependency identification information, the third data detection rule comprising the external dependency identification information, the third processing rule comprising the dependency identification information, and the first QoS rule comprising the external dependency identification information and the dependency identification information corresponding to the external dependency identification information; and
transmitting the first QoS profile information to a network device, transmitting the third data detection rule and the third processing rule to an anchor user plane object, UPO, and transmitting the first QoS rule to a terminal.

9. The method according to claim 8, wherein the external dependency identification information comprises identification information that is determined by an application object, AO, or a network exposure object, NEO, and that is configured for indicating whether interdependency exists between different packets.

10. A packet transmission method, executable by a network device corresponding to a session management object, SMO, and the method comprising:
obtaining a second packet processing policy rule from policy control object, PCO, the second packet processing policy rule comprising external group identification information of a packet of a target service stream, group identification information that is of a packet in a core network and that corresponds to the external group identification information, inter-group external dependency identification information of the packet, and inter-group dependency identification information that is of the packet in the core network and that corresponds to the inter-group external dependency identification information;
generating second quality of service, QoS profile information of the target service stream, a fourth data detection rule, a fourth processing rule, and a second QoS rule according to the second packet processing policy rule, the second QoS profile information comprising a second data detection rule and a second processing rule, the second data detection rule comprising the group identification information and the inter-group dependency identification information, the fourth data detection rule comprising the external group identification information and the inter-group external dependency identification information, the fourth processing rule comprising the group identification information and the inter-group dependency identification information, and the second QoS rule comprising the external group identification information, the group identification information corresponding to the external group identification information, the inter-group external dependency identification information, and the inter-group dependency identification information corresponding to the inter-group external dependency identification information; and
transmitting the second QoS profile information to a network device, transmitting the fourth data detection rule and the fourth processing rule to an anchor user plane object, UPO, and transmitting the second QoS rule to a terminal.

11. The method according to claim 10, wherein the second packet processing policy rule further comprises intra-group external dependency identification information of the packet of the target service stream and intra-group dependency identification information that is of the packet in the core network and that corresponds to the intra-group external dependency identification information;
the second data detection rule further comprises the intra-group dependency identification information; and
the fourth data detection rule further comprises the intra-group external dependency identification information, and the fourth processing rule further comprises the intra-group dependency identification information.

12. A packet transmission method, executable by a network device corresponding to a policy control object, PCO, and the method comprising:
obtaining external dependency identification information of a packet of a target service stream;
determining dependency identification information that is of a packet in a core network and that corresponds to the external dependency identification information;
generating a first packet processing policy rule according to the dependency identification information, the first packet processing policy rule comprising the external dependency identification information and the dependency identification information corresponding to the external dependency identification information; and
transmitting the first packet processing policy rule to a session management object, SMO.

13. A packet transmission method, executable by a network device corresponding to a policy control object, PCO, and the method comprising:
obtaining external group identification information of a packet of a target service stream and inter-group external dependency identification information of the packet;
determining group identification information that is of a packet in a core network and that corresponds to the external group identification information, and inter-group dependency identification information that is of the packet in the core network and that corresponds to the inter-group external dependency identification information;
generating a second packet processing policy rule, the second packet processing policy rule comprising the external group identification information, the group identification information corresponding to the external group identification information, the inter-group external dependency identification information, and the inter-group dependency identification information corresponding to the inter-group external dependency identification information; and
transmitting the second packet processing policy rule to a session management object, SMO.

14. A packet transmission method, executable by a network device corresponding to an application object, AO, and the method comprising:
transmitting external dependency identification information of a packet of a target service stream to a policy control object, PCO through a first request message; and
receiving a first response message returned for the first request message,
the first request message being configured for instructing the PCO to determine dependency identification information of a packet in a core network corresponding to the external dependency identification information according to the external dependency identification information, and generate a first packet processing policy rule, the first packet processing policy rule comprising the external dependency identification information and the dependency identification information corresponding to the external dependency identification information.

15. A packet transmission method, executable by a network device corresponding to an application object, AO, and the method comprising:
transmitting external group identification information of a packet of a target service stream and inter-group external dependency identification information of the packet to a policy control object, PCO through a second request message; and
receiving a second response message returned for the second request message,
the second request message being configured for instructing the PCO to determine group identification information that is of a packet in a core network and that corresponds to the external group identification information and inter-group dependency identification information that is of the packet in the core network and that corresponds to the inter-group external dependency identification information, and generate a second packet processing policy rule, and the second packet processing policy rule comprising the external group identification information, the group identification information corresponding to the external group identification information, the inter-group external dependency identification information, and the inter-group dependency identification information corresponding to the inter-group external dependency identification information.

16. A packet transmission method, executable by a terminal, and the method comprising:
obtaining a first quality of service, QoS, rule or a second QoS rule of a target service stream, the first QoS rule comprising external dependency identification information of a packet of the target service stream and dependency identification information that is of a packet in a core network and that corresponds to the external dependency identification information; and the second QoS rule comprising external group identification information of the packet of the target service stream, group identification information that is of a packet in a core network and that corresponds to the external group identification information, inter-group external dependency identification information of the packet of the target service stream, and inter-group dependency identification information that is of the packet in the core network and that corresponds to the inter-group external dependency identification information;
marking, in response to determining that external dependency identification information of an uplink packet of the target service stream satisfies the first QoS rule, the uplink packet with the dependency identification information; or marking, in response to determining that external group identification information and inter-group external dependency identification information of an uplink packet of the target service stream satisfy the second QoS rule, the uplink packet with the group identification information and the inter-group dependency identification information; and
transmitting the uplink packet to a network device.

17. A packet transmission method, executable by a network device corresponding to an application object, AO, and the method comprising:
transmitting an updated frame rate parameter of a target service stream to a policy control object, PCO,
the updated frame rate parameter being configured for instructing the PCO to generate a network configuration policy rule and transmit the network policy configuration policy rule to a session management object, SMO, and the network configuration policy rule comprising the updated frame rate parameter;
the network configuration policy rule being configured for instructing the SMO to transmit the updated frame rate parameter to a network device; and
the updated frame rate parameter being configured for instructing the network device to update network parameter configuration information of the network device and a terminal according to the updated frame rate parameter.

18. A communication device, comprising:
one or more processors; and
a memory, configured to store one or more programs, the one or more programs, when being executed by the one or more processors, causing the communication device to implement the method according to any one of claims 1 to 3; or the method according to any one of claims 4 to 7; or the method according to claim 8; or the method according to claim 10 or 11; or the method according to claim 12; or the method according to claim 13; or the method according to claim 14; or the method according to claim 15; or the method according to claim 16; or the method according to claim 17.

19. A computer-readable storage medium, the computer-readable storage medium storing a computer program, and the computer program, when being run on a computer, causing the computer to perform the method according to any one of claims 1 to 3; or the method according to any one of claims 4 to 7; or the method according to claim 8; or the method according to claim 10 or 11; or the method according to claim 12; or the method according to claim 13; or the method according to claim 14; or the method according to claim 15; or the method according to claim 16; or the method according to claim 17.

20. A computer program product, comprising a computer program, the computer program, when being executed by a computer, implementing the method according to any one of claims 1 to 3; or the method according to any one of claims 4 to 7; or the method according to claim 8; or the method according to claim 10 or 11; or the method according to claim 12; or the method according to claim 13; or the method according to claim 14; or the method according to claim 15; or the method according to claim 16; or the method according to claim 17.
